(19) Europäisches Patentamt / European Patent Office / Office européen des brevets

(11) EP 4 406 642 A1

(12) **EUROPÄISCHE PATENTANMELDUNG**

(43) Veröffentlichungstag:
**31.07.2024 Patentblatt 2024/31**

(21) Anmeldenummer: **24153934.5**

(22) Anmeldetag: **25.01.2024**

(51) Internationale Patentklassifikation (IPC):
***B01J 19/00*** *(2006.01)* ***B01J 37/00*** *(2006.01)*
***B01J 35/40*** *(2024.01)* ***B01J 35/45*** *(2024.01)*
*B01J 23/42 (2006.01)* *B01J 23/44 (2006.01)*

(52) Gemeinsame Patentklassifikation (CPC):
**B01J 19/0093; B01J 23/42; B01J 23/44;**
**B01J 31/00; B01J 35/45; B01J 35/505;**
B01J 2219/00013; B01J 2219/0002;
B01J 2219/00042; B01J 2219/00813;
B01J 2219/00846; B01J 2219/00862;
B01J 2219/00867; B01J 2219/00869;
B01J 2219/00871; (Forts.)

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**
Benannte Erstreckungsstaaten:
**BA**
Benannte Validierungsstaaten:
**GE KH MA MD TN**

(30) Priorität: **26.01.2023 DE 102023101927**

(71) Anmelder: **Karlsruher Institut für Technologie**
**76131 Karlsruhe (DE)**

(72) Erfinder:
- **Schmitt, Christian**
  **76133 Karlsruhe (DE)**
- **Behrens, Silke**
  **76135 Karlsruhe (DE)**

(74) Vertreter: **Gille Hrabal Partnerschaftsgesellschaft mbB**
**Patentanwälte**
**Brucknerstraße 20**
**40593 Düsseldorf (DE)**

(54) **VERFAHREN ZUR KONTINUIERLICHEN CLUSTER- UND NANOPARTIKELSYNTHESE**

(57) Die vorliegende Erfindung betrifft eine Anlage zur kontinuierlichen Herstellung von Clustern und Nanopartikeln worin ein oder mehrere Reaktormodule mit kontinuierlichen Rührkesselreaktoren (CSTRs) in kaskaden-förmiger Anordnung vorgesehen sind und welche sich durch einen modularen Aufbau mit variabler Anzahl und Anordnung der einzelnen Reaktormodule und Rührkesselreaktoren auszeichnet. Die Erfindung umfasst ferner ein neues Verfahren zur kontinuierlichen Synthese von Clustern und Nanopartikeln in einer solchen Anlage.

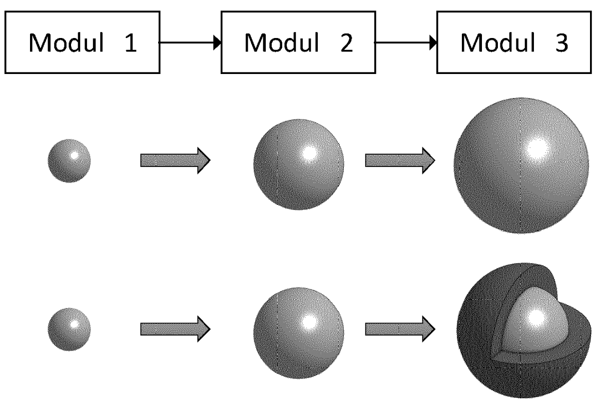


FIG. 1

EP 4 406 642 A1

(52) Gemeinsame Patentklassifikation (CPC): (Forts.)
B01J 2219/00882; B01J 2219/0095;
B01J 2219/00997; B01J 2235/00; B01J 2235/15

## Beschreibung

### EINLEITUNG

Die vorliegende Erfindung betrifft eine Anlage zur kontinuierlichen Herstellung von Clustern und Nanopartikeln worin ein oder mehrere Reaktormodule mit kontinuierlichen Rührkesselreaktoren (Continuous Stirred Tank Reactors; CSTRs) in kaskaden-förmiger Anordnung vorgesehen sind und welche sich durch einen modularen Aufbau mit variabler Anzahl und Anordnung der einzelnen Reaktormodule und Rührkesselreaktoren auszeichnet. Die Erfindung umfasst ferner ein neues Verfahren zur kontinuierlichen Synthese von Nanopartikeln und Clustern in einer solchen Anlage.

### HINTERGRUND

Cluster und Nanopartikel (auch: Nanokristalle) zeigen interessante größen- und formabhängige optische, elektrische, magnetische und katalytische Eigenschaften, die für viele biomedizinische und technische Anwendungen von großem Interesse sind. Das gilt allgemein für Nanopartikel der verschiedensten Materialien wie z.B. Ferrite welche magnetische Eigenschaften aufweisen können, Metallchalkogenide und Metallpnictide welche optische Eigenschaften aufweisen können, sowie Metall-, Halbmetall- und Übergangsmetallpartikel bzw. deren Oxidformen welche u.a. katalytische Eigenschaften aufweisen können.

Nanopartikel können mittels kolloidchemischer Verfahren hergestellt werden. Kolloidchemische Verfahren zur Synthese von Nanopartikeln umfassen unter anderem Verfahren der (Co-)Fällung, Thermolyse sowie Reduktionsverfahren. Gängige Verfahren der Katalysatorherstellung basieren insbesondere auf Verfahren der (Co-)Fällung, der Imprägnierung bzw. der trockenen Imprägnierung / Kapillarimprägnierung ("Incipient Wetness") wobei insbesondere die Imprägnierung zu nanoskaligen Partikeln auf einem Trägermaterial führt. Kolloidchemisch über die vorgenannten Methoden hergestellte Nanopartikel werden außerdem in sogenannten Präkursor-Verfahren als Vorläufer für die Katalysatorherstellung eingesetzt. Dabei ist das Präkursor-Verfahren - auch Präkursor Konzept - gegenüber Fällungs- oder Imprägnierungsverfahren in der Lage, Partikel mit definierter Form, Größe und enger Größenverteilung, d.h. mit definierten Materialparametern, herzustellen. Im Präkursor-Verfahren werden aus einer Reaktionslösung (Präkursorlösung) zunächst in einer Keimbildungsphase die gewünschten Partikel-Keime gebildet und diese dann in einer Wachstumsphase zu (Nano)partikeln der gewünschten Größe kristallisiert. Je nach Anwendungsgebiet, können die so zu definierter Größe gewachsenen Partikel anschließend auf Trägermaterialien immobilisiert, mit Beschichtungen (Coatings) überzogen oder oberflächenfunktionalisiert werden. Bei derart hergestellten Partikeln handelt es sich um im Wesentlichen sphärische Partikel.

Gewöhnlich werden Verfahren zur Nanopartikelsynthese, die auch für das Präkursor-Verfahren zur Katalysatorherstellung eingesetzt werden, im sogenannten Satzbetrieb gefahren (z.B. im Labormaßstab in Glaskolben). So werden beispielsweise literaturbekannte Synthesen für Edelmetallnanopartikel im Satzbetrieb mit hochverdünnten Edelmetall-Lösungen durchgeführt. Allerdings ist die Konzentration bzw. die Ausbeute an Edelmetallnanopartikeln aus solchen Verfahren für praktische Anwendungen, wie z.B. die Katalysatorherstellung, zu gering. Es ist außerdem oft schwierig, die für die intendierte Anwendung gewünschte Größe der Nanopartikel gezielt und reproduzierbar einzustellen. So liegt beispielsweise die Größe der meisten in der Literatur beschriebenen Pt-Partikel im Bereich 1-3 nm. Die Größe der Nanopartikel kann im Satzbetrieb über mehrstufige Keim-Wachstumsverfahren über einen Größenbereich bis zu ca. 20 nm eingestellt werden. Die Synthese von Pd-Nanopartikeln in Oleylamin in Gegenwart von Trioctylphosphan im Satzbetrieb wurde u.a. von den Erfindern der vorliegenden Erfindung in ACS Catal. 2021, 11, 2288-2301 beschrieben.

Außerdem wird die Synthese von multimetallischen, mehrschaligen Nanopartikeln mit verschiedenen Materialkombinationen über solche Keim-Wachstumsverfahren im Satzbetrieb beschrieben, welche zu Nanopartikelsystemen mit interessanten Eigenschaften führt.

Allerdings ist das Hochskalieren dieser Synthesen im Satzbetrieb auf industriell anwendbare Herstellverfahren schwierig, da mit besonders großem Zeit- und Materialaufwand verbunden, u.a. deshalb, weil mehrere aufeinanderfolgende Syntheseschritte notwendig sind.

Die Bildung der Nanopartikel reagiert außerdem empfindlich auf Änderungen der Reaktionsparameter und das Skalieren einer Synthese im Satzbetrieb führt typischerweise zu Veränderungen beispielsweise des Wärme- und Massentransports. Neben der oft großen Verdünnung der Syntheseansätze führt dies dazu, dass das Hochskalieren der Syntheseansätze und das reproduzierte Einstellen der Partikelparameter (z.B. der Partikelgröße) im Satzbetrieb oft sehr schwierig bis manchmal unmöglich ist. Dies gilt insbesondere für sogenannte Heißinjektionsverfahren, aber auch für Aufheizverfahren. Insbesondere die präzise Synthese von Clustern mit definierter Atomanzahl ist in der Regel selbst im Satzbetrieb auf sehr kleine Ausbeuten beschränkt. Die Übertragung solcher Syntheseverfahren im Satzbetrieb auf einen großen Maßstab, wie beispielsweise für industrielle Verfahren relevant, ist daher insgesamt schwierig.

Gerade für die Herstellung von Katalysatormaterialien in Form von Pulverkatalysatoren, insbesondere für Katalysatoren, die auf teuren Edelmetallen basieren und in zunehmendem Maß für den Einsatz in der Emissionskontrolle

(Abgaskatalysatoren) oder als Elektrokatalysatoren (z.B. in Brennstoffzellen) benötigt werden, besteht großer Bedarf für die Bereitstellung von large-scale Verfahren, mit denen es möglich ist die Aktivität, Selektivität und Stabilität der Katalysatormaterialien zu verbessern und so u.a. auch den Edelmetallverbrauch so weit wie möglich zu reduzieren.

## STAND DER TECHNIK

In den letzten Jahren wurden verschiedene kontinuierliche Verfahren zur Nanopartikelsynthese entwickelt, die gewöhnlich auf Rohrreaktoren (Plug-Flow-Reaktoren; PFR) mit unterschiedlichen Verfahrensweisen (Mikrostrukturreaktoren, Mikrowellensynthese etc.) beruhen. Dabei wird die Reaktionszeit über die Länge des Rohrreaktors und die Durchflussrate kontrolliert. Insbesondere Nanopartikel- bzw. Clustersynthesen mit langsamen Reaktionskinetiken erfordern aufgrund der langen Reaktionszeit lange Reaktoren oder kleine Durchflussgeschwindigkeiten. Das führt entsprechend entweder zu großem Druckabfall im Reaktor oder einer laminaren Strömung mit schlechter Durchmischung des Reaktionsgemisches. Insbesondere bei sehr kleinen Reaktordurchmessern ist auch das Fouling an den Reaktorwänden, welches bis zur Verstopfung des Reaktors führen kann, ein großes Problem. Derartige Verfahren sind daher für Herstellverfahren basierend auf Synthesen mit langsamen Reaktionskinetiken nicht einsetzbar.

Jensen et al. (Y. Mo und K. F. Jensen: "A miniature CSTR cascade for continous flow of reactions containing solids"- React. Chem. Eng., 2016, 1, 501-507*)* beschreiben in ihrer Publikation eine Implementierung von zwei organischen Reaktionen unter Bildung von Feststoff, nämlich a) Umsetzung von Glyoxal mit Cyclohexylamin zu N,N'-Dicyclohexylethylendiimin und b) Sulfonylierung von 2-Octanol mit Methansulfonylchlorid im Labormaßstab unter Verwendung einer Miniatur-Kaskade von kontinuierlichen Rührkesselreaktoren (Miniatur CSTR-Kaskade; CSTR; engl. continuous stirred tank reactor) aus Teflon. Die Synthese von Clustern oder Nanopartikeln wird darin nicht beschrieben. Die Ergebnisse demonstrieren lediglich das grundsätzliche Potenzial einer CSTR-Kaskade kontinuierlich (im Dauerbetrieb) größere Feststoffpartikel zu transportieren, ohne die Anlage zu verstopfen.

Ibarra-Sanchez et al. beschreiben in ihrer Publikation (Ind. Eng. Chem. Res. 2020, 59, 38, 16669-16683) die kontinuierliche Synthese von Magnetit-Nanopartikeln in zwei hintereinander geschalteten CSTRs inklusive einer nachgeschalteten Einheit zur Aufarbeitung der Nanopartikel. Darin erfolgt die Synthese der Partikel aus Eisen(III)acetylacetonat in Octadecen in Gegenwart einer Mischung aus Ölsaure, Oleylamin und 1,2-Dodekandiol. In der hierin beschriebenen Anlage dient der erste CSTR als Keimbildungszone und der zweite CSTR als Wachstumszone. In der hierin beschriebenen Anlage werden nur zwei hintereinander geschaltete, kontinuierliche Rührkesselreaktoren für die Synthese der Magnetit-Nanopartikel eingesetzt, um darüber die Keimbildungszone von der Wachstumszone der Partikel zu trennen.

In ihrer späteren Publikation (ACS Appl. Mater. Interfaces 2020, 12, 6699-6706) beschreiben Jensen et al. ein Verfahren zur Synthese von Silikatpartikeln mit einem Größenbereich je nach Reaktionsbedingungen zwischen 28 bis 125 nm in einem modifizierten Stöber-Verfahren durch Hydrolyse von Tetraethoxysilan mit deren anschließender Beschichtung mit Polyethylenimin und Gluconolacton in einer Anlage im Labormaßstab, welche aus mehreren Modulen 3D-gedruckter Miniatur CSTR-Kaskaden mit jeweils acht CSTRs besteht. Durch die Verwendung 3D-gedruckter Module ist die Anlage hinsichtlich der Anzahl und Anordnung der CSTRs in den Modulen fixiert.

Die DE102004003925A1 beschreibt eine Vorrichtung zur Durchführung kontinuierlicher chemischer Synthesen mit senkrecht übereinander angeordneten Reaktionskammern die einen von unten nach oben durchströmten Säulenreaktor bilden, worin jede Kammer für sich einen kontinuierlich betriebenen Rührkessel darstellt. Hierin wird keine Synthese von Nanopartikeln oder Clustern beschrieben.

US2015108400A1 beschreibt ein Verfahren und eine Vorrichtung zur Herstellung von Graphitoxid, worin ein Oxidationsmittel bei konstant niedriger Temperatur stufenweise in einen mehrstufigen, sequenziellen Chargen-Oxidationsmittelmischer zugegeben und darin unter Unterdrückung einer Oxidationsreaktion gemischt wird. In einem weiteren Reaktionsbereich wird ein kontinuierlicher Rührkesselreaktor zur Ausreifung der Oxidationsreaktion eingesetzt, jedoch keine Kaskade kontinuierlicher Rührkesselreaktoren.

US2021/0060656A1 beschreibt ein kontinuierliches Verfahren zur Herstellung von Nanodrähten (*engl.: Nanowires*) mit größerem Aspekt-Verhältnis, insbesondere einer Länge im $\mu$m-Bereich, und großem Durchsatz unter der Verwendung in Reihe geschalteter CSTRs. Das Syntheseverfahren bezieht sich spezifisch auf die kontinuierliche Polyolsynthese (Ethylenglykol) von Ag-Nanodrähten mit hohem Aspektverhältnis mittels oxidativem Ätzen in Gegenwart von Alkalimetallhalogeniden bzw. Cu- oder Fe-Halogenid (Chlorid, Bromid oder lodid) ohne Veränderung der Stöchiometrie des Reaktionsprotokolls (Ethylenglykol, PVP, 110-180°C). Nanodrähte, wie mit dem darin beschriebenen Verfahren herstellbar, unterscheiden sich aufgrund ihrer Morphologie und Eigenschaften grundsätzlich von Nanopartikeln mit drei Dimensionen im Nanometerbereich, insbesondere durch Ihre Größe. Insbesondere für die Herstellung von Katalysatoren werden jedoch Partikel und Cluster im unteren Nanometer- bzw. Subnanometerbereich benötigt, da solche ein immenses Potenzial für die Anwendungen als Katalysatoren bieten. Insbesondere für Clusterverbindungen mit präzisen Atomzahlen können bereits einzelne Atome die katalytischen Eigenschaften erheblich beeinflussen.

Die DE22 50 274A beschreibt ein Verfahren und eine Vorrichtung zur kontinuierlichen Herstellung von Fällungs-

und Tränkungskatalysatoren. Darin wird beschrieben, dass das Verfahren gestattet, aus Metallsalzlösungen durch kontinuierliche Zugabe von sogenannten Katalysatorträgern in der gewünschten Menge durch Adsorption bzw. durch Fixierung mit Hilfe eines Fällungsmittels in einer gezielten Fällzonenabstufung bei konstanter oder steuerbarer Temperaturführung homogen geschaffene Katalysatoren unterschiedlicher Art und Konzentration kontinuierlich herzustellen. Die Fällzonenabstufung erfolgt darin durch den Einbau von Trennwänden in die Fäll- bzw. Adsorptionsstrecke, wodurch auf engstem Raum die Wirkung einer aus mehreren Rührgefässen bestehenden Rührwerkskaskade erzielt wird.

Die IN2015DE02834 beschreibt ein kontinuierliches Verfahren zur skalierbaren Herstellung von Metallnanopartikeln durch Reduktion mit Citrat (Turkevich-Methode) und durch Reduktion mit Borhydrid. Es werden sowohl parallel geschaltete CSTRs als auch CSTR-Kaskaden eingesetzt. Eine solche Partikelsynthese über die Reduktion des Metallsalzes mit Citrat (Turkevich-Methode) bzw. Borhydrid weist den Nachteil auf, dass die Reduktionsgeschwindigkeiten insbesondere bei Einsatz von Borhydriden sehr schnell sind. In den darin beschriebenen Verfahren wird die Partikelbildung stark vom Mischverhalten beeinflusst.

## AUFGABENSTELLUNG

Ausgehend von diesem Stand der Technik bestand die Aufgabe der vorliegenden Erfindung in der Bereitstellung einer verbesserten Anlage zur kontinuierlichen Herstellung von Clustern und Nanopartikeln, welche die Nachteile der bisher lediglich für den Labormaßstab vorbeschriebenen Anlagen nicht aufweist. In einem besonderen Aspekt der Erfindung lag die Aufgabe darin, eine Anlage zur kontinuierlichen Herstellung von Clustern und Nanopartikeln bereitzustellen, mit welcher Cluster bzw. Nanopartikel mit gezielter und reproduzierbarer Einstellung hinsichtlich Form, Größe und/oder Partikelgrößenverteilung für die jeweils intendierte Anwendung herstellbar sind. Insbesondere sollte damit die Möglichkeit zur Herstellung von atomdefinierten Clustern und Nanopartikeln mit enger Partikelgrößenverteilung möglich sein. Derartige Cluster bzw. Nanopartikel weisen insbesondere Abmessungen im Nanometerbereich auf. In einem weiteren Aspekt der Erfindung lag die Aufgabe darin, eine Anlage zur kontinuierlichen Herstellung von Clustern/Nanopartikeln bereitzustellen, mit der eine einfache Implementierung vieler literaturbekannter Cluster-/Nanopartikelsynthesen im Bereich von 5 bis 300 °C, insbesondere Hochtemperatursynthesen, möglich ist. Die Anlage sollte für eine breite und große Variabilität unterschiedlicher Nanopartikelsysteme einsetzbar und hinsichtlich ihrer Funktionalität nicht auf ausgewählte Nanopartikelsysteme beschränkt sein. Es sollte außerdem die Möglichkeit bestehen, Nanopartikel verschiedenster Materialien, insbesondere Metall-, Halbmetall- und Übergangsmetallpartikel bzw. deren Oxidformen, sowie komplexere Nanopartikelstrukturen mit unterschiedlichen Materialzusammensetzungen, z.B. in Form einer sogenannten Kern-Schale-Struktur, darin herzustellen. Die Anlage sollte insbesondere auch für Syntheseverfahren mit langsamen Reaktionskinetiken und langen Verweilzeiten geeignet sein. Die Anlage sollte darüber die Möglichkeit zur variablen Anpassung an die jeweiligen Reaktionskinetiken der darin ablaufenden Reaktionen und damit zur gezielten Kontrolle der Herstellung der Cluster bzw. Nanopartikel bieten. Die Anlage sollte die größtmögliche Flexibilität in der Herstellung und Optimierung von Nanopartikeln bzw. Clustern ermöglichen und insbesondere auch die Möglichkeit zur Implementierung zusätzlicher Bearbeitungsschritte im kontinuierlichen Verfahren, wie z.B. Immobilisierung auf Trägermaterialien, Coating, Oberflächenfunktionalisierung etc. bieten. Die Anlage sollte störunanfällig und stabil laufen und einheitliche Verweilzeiten ermöglichen, und insbesondere einfach skalierbar sein zur Bereitstellung im large-scale Betrieb ohne Qualitätsverlust der Nanopartikel- bzw. der Clusterherstellung. Mit der Entwicklung der erfindungsgemäßen Anlagen sollten außerdem neue Verfahren zur kontinuierlichen Herstellung von Clustern und Nanopartikeln bereitgestellt werden, welche sich durch eine effizientere Verfahrensführung und effizientere (reduzierte) Nutzung von Rohstoffen, Energie und Zeit, insbesondere auch bei (mindestens) Beibehaltung oder sogar Verbesserung der Ausbeuten, Reproduzierbarkeit und Produktqualität, auszeichnen und die sowohl im Labormaßstab als auch im industriellen large-scale Betrieb einsetzbar sind.

## BESCHREIBUNG DER ERFINDUNG

Die vorliegende Erfindung wird nachfolgend näher beschrieben und umfasst insbesondere die folgenden Ausführungsformen:

[1] Anlage zur kontinuierlichen Herstellung von Clustern und/oder Nanopartikeln, welche ein oder mehrere Reaktormodule umfasst, worin die Reaktormodule unabhängig voneinander jeweils einen oder mehrere kontinuierliche Rührkesselreaktoren (CSTRs) aufweisen und worin mindestens ein Reaktormodul mehr als einen CSTR in einer Anordnung einer kontinuierlichen Rührkesselkaskade (CSTR-Kaskade) aufweist, worin jeder CSTR mit einer eigenen Rührvorrichtung ausgestattet ist, und worin die einzelnen CSTRs so ausgestaltet sind, dass ihr jeweiliges Reaktorvolumen unabhängig voneinander variabel verändert werden kann.

[2] Anlage gemäß 1 zur kontinuierlichen Herstellung von Clustern und/oder Nanopartikeln, wobei die Cluster und/oder

Nanopartikel ausgewählt sind aus den Gruppen umfassend

(a) Metall- oder Metalloxidpartikel bzw. -cluster oder Mischformen davon,

(b) Übergangsmetall- und insbesondere Edelmetall-basierte Cluster und Nanopartikel,

(c) Ferrite,

(d) Metallpnictide,

(e) Metallchalkogenide,

(f) oxidische Katalysatoren und Trägermaterialien für Katalysatoren, umfassend $SiO_2$, $Al_2O_3$, $Ga_2O_3$, $In_2O_3$, TiOz, CeOz, $La_2O_3$, ZrOz, $V_2O_5$ und deren Mischformen, und

(g) Metallcarbide.

[3] Anlage gemäß 1 oder 2, welche insgesamt mindestens drei kontinuierliche Rührkesselreaktoren (CSTRs), vorzugsweise mindestens eine aus mindestens 3 CSTRs bestehende CSTR-Kaskade, aufweist.

[4] Anlage gemäß 1 bis 3, welche Zu- und Ablaufvorrichtungen an den CSTRs aufweist.

[5] Anlage gemäß 1 bis 4, welche Zulaufvorrichtungen (Multidosierpunkte) und Ablaufvorrichtungen (Multientnahmepunkte) an mehreren ausgewählten CSTRs in der Anlage aufweist.

[6] Anlage gemäß 1 bis 5, worin die einzelnen CSTRs jeweils über deren Reaktordeckel oder -verschlüsse variabel einstellbare Reaktorvolumina aufweisen

[7] Anlage gemäß 1 bis 6, worin die Reaktormodule umfassend die CSTR-Kaskaden hintereinander (seriell) angeordnet sind.

[8] Anlage gemäß 1 bis 6, worin die Reaktormodule umfassend die CSTR-Kaskaden parallel zueinander angeordnet sind.

[9] Anlage gemäß 1 bis 8, umfassend sowohl seriell angeordnete Reaktormodule mit CSTR-Kaskaden als auch parallel angeordnete Reaktormodule mit CSTR-Kaskaden.

[10] Anlage gemäß 1 bis 9, worin

(i) mindestens drei Reaktormodule seriell angeordnet sind, oder

(ii) mindestens zwei Reaktormodule seriell angeordnet sind und zusätzlich mindestens ein Reaktormodul parallel zu den seriell angeordneten Reaktormodulen angeordnet ist, oder

(iii) zwei oder mehr Reaktormodule parallel zueinander angeordnet sind und mindestens ein weiteres Reaktormodul seriell vor oder nach den parallel angeordneten Reaktormodulen angeordnet ist, oder

(iv) mehrere serielle Anordnungen von Reaktormodulen zueinander parallel angeordnet sind.

[11] Anlage gemäß 1 bis 10, umfassend außerdem eine oder mehrere voneinander unabhängige Vorrichtungen zum Heizen der CSTRs, worin diese Heizvorrichtungen so ausgestattet sind, dass

(i) alle CSTRs in einem Reaktormodul gleichmäßig temperiert werden, oder

(ii) innerhalb eines Reaktormoduls Heizzonen gebildet werden können, die eine Temperierung der einzelnen CSTRs innerhalb eines Moduls unabhängig voneinander ermöglicht, oder

(iii) alle CSTRs in der Anlage unabhängig voneinander temperiert werden können.

[12] Anlage gemäß 11, worin die Vorrichtungen zum Heizen der CSTRs zur Erzeugung von Temperaturen bis jeweils 600 °C ausgelegt sind.

[13] Anlage gemäß 11 oder 12, worin die Vorrichtungen zum Heizen der CSTRs so ausgestattet sind, dass eine Einstellung eines homogenen Temperaturprofils innerhalb eines Reaktormoduls erfolgen kann.

[14] Anlage gemäß 1 bis 13, welche hinsichtlich der Anzahl und Anordnung der einzelnen Reaktormodule und der einzelnen CSTRs innerhalb der Reaktormodule modular und variabel ausgestaltet ist, bzw. welche hinsichtlich der Anzahl und Anordnung der einzelnen Reaktormodule und der einzelnen CSTRs innerhalb der Reaktormodule einen modularen und variabel anpassbaren Aufbau aufweist.

[15] Anlage gemäß 1 bis 14, worin mindestens ein Reaktormodul weniger oder mehr als 8 CSTRs aufweist.

[16] Anlage gemäß 1 bis 15, worin mindestens ein Reaktormodul eine CSTR-Kaskade aus 3, 4 oder 5 CSTRs aufweist.

[17] Anlage gemäß 1 bis 16, umfassend mindestens zwei Reaktormodule die unabhängig voneinander jeweils mindestens zwei hintereinander angeordnete CSTRs in einer Anordnung einer CSTR-Kaskade aufweisen.

[18] Anlage gemäß 17, worin die mindestens zwei Reaktormodule unabhängig voneinander jeweils 3, 4 oder 5 hintereinander angeordnete CSTRs in einer Anordnung einer CSTR-Kaskade aufweisen.

[19] Anlage gemäß 1 bis 18, umfassend mindestens zwei Reaktormodule, welche jeweils fünf hintereinander angeordnete CSTRs in einer Anordnung einer CSTR-Kaskade umfassen.

[20] Anlage gemäß 1 bis 19, umfassend zwei, drei oder mehr Reaktormodule, welche jeweils mehrere hintereinander angeordnete CSTRs in einer Anordnung einer CSTR-Kaskade umfassen.

[21] Anlage gemäß 1 bis 20, worin die CSTRs aus Edelstahl gebildet sind.

[22] Verwendung der Anlage gemäß 1 bis 21 zur kontinuierlichen Herstellung von Clustern und/oder Nanopartikeln ausgewählt aus den Gruppen umfassend

(a) Metall- oder Metalloxidpartikel bzw. -cluster oder Mischformen davon,

(b) Übergangsmetall- und insbesondere Edelmetall-basierte Nanopartikel und Cluster,

(c) Ferrite,

(d) Metallpnictide,

(e) Metallchalkogenide,

(f) oxidische Katalysatoren und Trägermaterialien für Katalysatoren, umfassend $SiO_2$, $Al_2O_3$, $Ga_2O_3$, $In_2O_3$, TiOz, CeOz, $La_2O_3$, ZrOz, $V_2O_5$ und deren Mischformen,

(g) Metallcarbide.

[23] Verwendung einer Anlage gemäß 1 bis 21 zur kontinuierlichen Herstellung von Metall- oder Metalloxidnanopartikeln mit einer Kern-Schale-Struktur, worin die Anlage so ausgestattet ist, dass mindestens zwei Reaktormodule seriell angeordnet sind und jeweils unabhängig voneinander 3 oder mehr CSTRs aufweisen.

[24] Verwendung einer Anlage gemäß 1 bis 21 zur kontinuierlichen Herstellung von Metall- oder Metalloxidpartikeln bzw. -clustern oder Mischformen davon.

[25] Verwendung einer Anlage gemäß 1 bis 21 zur kontinuierlichen Herstellung von Übergangsmetall- und Edelmetall-basierten Nanopartikeln und/oder Clustern.

[26] Verwendung einer Anlage gemäß 1 bis 21 zur kontinuierlichen Herstellung von Metall-, Halbmetall- oder Übergangsmetall- und Edelmetall-basierten Clustern oder Nanopartikeln sowie deren Oxidformen immobilisiert auf einem Trägermaterial, worin die Anlage so ausgestattet ist, dass mindestens zwei Reaktormodule seriell angeordnet sind und mindestens ein Reaktormodul parallel zu den seriell angeordneten Reaktormodulen angeordnet ist, und worin die Reaktormodule jeweils unabhängig voneinander 3 oder mehr CSTRs aufweisen.

[27] Verwendung gemäß 26 zur kontinuierlichen Herstellung von Trägerkatalysatoren.

[28] Verfahren zur kontinuierlichen Herstellung von Clustern und/oder Nanopartikeln im Durchflussverfahren, insbesondere in einer Anlage gemäß 1 bis 21, umfassend die Schritte

(a) Zuführung einer ersten Reaktionslösung zur Herstellung von Clustern oder Nanopartikeln (Präkursor 1) in einen CSTR in einem ersten Reaktormodul umfassend einen oder mehrere hintereinander angeordnete kontinuierliche Rührkesselreaktoren (CSTRs) und Ausbildung von Clustern oder Nanopartikeln aus der Reaktionslösung in einer ersten Keim-Wachstumsphase im Durchfluss durch den einen oder mehrere der CSTRs im Reaktormodul, und

(b) Überführung der im ersten Reaktormodul gebildeten Cluster oder Nanopartikel in ein zweites, seriell dazu angeordnetes, Reaktormodul umfassend einen oder mehrere hintereinander angeordnete kontinuierliche Rührkesselreaktoren (CSTRs), und

(c) Zuführung einer zweiten Reaktionslösung (Präkursor 2) und/oder Stabilisator-Lösung über die Zulaufvorrichtung an einem oder mehreren weiteren CSTRs im ersten oder zweiten Reaktormodul, so dass in den mit Präkursor 1 bespeisten CSTRs Cluster oder Nanopartikel in einer Keim-Wachstumsphase gebildet werden und in den mit Präkursor 2 bespeisten nachfolgend angeordneten CSTRs in einer Partikel-Wachstumsphase eine Zunahme der Cluster- oder Nanopartikelgröße bzw. deren Stabilisierung durch Liganden erfolgt,

(d) gegebenenfalls Zuführung einer dritten Reaktionslösung (Präkursor 3) und/oder Stabilisator-Lösung über die Zulaufvorrichtung an einem oder mehreren weiteren CSTRs, die den mit Präkursor 2 bespeisten CSTRs nachfolgend angeordnet sind, im ersten, zweiten oder in einem oder mehreren weiteren Reaktormodulen.

[29] Verfahren zur kontinuierlichen Herstellung von Clustern und/oder Nanopartikeln im Durchflussverfahren gemäß 28, umfassend die Schritte

(a) Zuführung einer ersten Reaktionslösung zur Herstellung von Clustern oder Nanopartikeln (Präkursor 1) in ein erstes Reaktormodul umfassend einen oder mehrere hintereinander angeordnete kontinuierliche Rührkesselreaktoren (CSTRs) und Ausbildung von Clustern oder Nanopartikeln aus der Reaktionslösung in einer ersten Keim-Wachstumsphase im Durchfluss durch die CSTR-Kaskade im Reaktormodul, und

(b) Überführung der Nanopartikel der Keim-Wachstumsphase aus dem ersten Reaktormodul in ein zweites, seriell dazu angeordnetes, Reaktormodul umfassend einen oder mehrere hintereinander angeordnete kontinuierliche Rührkesselreaktoren (CSTRs) und Zuführung einer zweiten Reaktionslösung (Präkursor 2) und/oder Stabilisator-Lösung, so dass die Cluster oder Nanopartikel aus der Keim-Wachstumsphase des ersten Reaktormoduls im Durchflussverfahren unter Zunahme der Cluster- oder Nanopartikelgröße in einer Partikel-Wachstumsphase die zweite CSTR-Kaskade im zweiten Reaktormodul durchlaufen bzw. deren Stabilisierung durch Liganden erfolgt,

(c) gegebenenfalls Überführung der Cluster oder Nanopartikel aus dem zweiten Reaktormodul in ein drittes Reaktormodul umfassend einen oder mehrere hintereinander angeordnete kontinuierliche Rührkesselreaktoren (CSTRs) und Zuführung einer dritten Reaktionslösung (Präkursor 3) und/oder Stabilisator-Lösung, so dass die Cluster oder Nanopartikel aus dem zweiten Reaktormodul im Durchflussverfahren unter weiterer Zunahme der Cluster- oder Nanopartikelgröße bzw. deren Stabilisierung durch Liganden die weitere CSTR-Kaskade durchlaufen,

(d) gegebenenfalls Wiederholung des Schritts (c).

[30] Verfahren zur kontinuierlichen Herstellung von Clustern und/oder Nanopartikeln gemäß 28 oder 29, worin die in die Reaktormodule eingeführten Reaktionslösungen (Präkursorlösungen und/oder Stabilisator-Lösungen) jeweils

unabhängig voneinander gleiche oder unterschiedliche Reaktionslösungen sind.

[31] Verfahren zur kontinuierlichen Herstellung von Clustern und/oder Nanopartikeln gemäß einem von 28 bis 30, worin die Reaktormodule seriell angeordnet sind und Präkursor 1 und Präkursor 2 und ggf. Präkursor 3 bzw. die Stabilisator-Lösungen die gleiche Zusammensetzung aufweisen, und damit Cluster oder Nanopartikel hergestellt werden, welche eine einheitliche Zusammensetzung mit definierter Partikelgröße aufweisen.

[32] Verfahren zur kontinuierlichen Herstellung von Clustern und/oder Nanopartikeln gemäß einem von 28 bis 30, worin die Reaktormodule seriell angeordnet sind und worin wenigstens einer von Präkursor 2 und Präkursor 3 eine zu Präkursor 1 unterschiedliche Zusammensetzung aufweist, und damit Cluster oder Nanopartikel hergestellt werden, welche eine Kern-Schale-Struktur mit jeweils unterschiedlicher Zusammensetzung in Kern und Schale aufweisen.

[33] Verfahren zur kontinuierlichen Herstellung von Clustern und/oder Nanopartikeln gemäß einem von 28 bis 32, umfassend außerdem die Herstellung eines weiteren Materials in einem oder mehreren weiteren Reaktormodulen, welche parallel zu den seriell angeordneten Reaktormodulen angeordnet sind, und Zusammenführung des weiteren Materials und der Cluster oder Nanopartikel nach Durchlaufen der jeweiligen parallel angeordneten Reaktormodule mit den CSTR-Kaskaden und Modifizierung der Cluster oder Nanopartikel mit dem weiteren Material unter Erhalt modifizierter Cluster oder Nanopartikel.

[34] Verfahren zur kontinuierlichen Herstellung von Clustern und/oder Nanopartikeln gemäß 33, worin das weitere Material ein Trägermaterial ist, welches in dem einen oder den mehreren weiteren Reaktormodulen, welche parallel zu den seriell angeordneten Reaktormodulen angeordnet sind, hergestellt wird und Zusammenführung des Trägermaterials und der Cluster oder Nanopartikel nach Durchlaufen der jeweiligen parallel angeordneten Reaktormodule mit den CSTR-Kaskaden und Immobilisierung der Cluster oder Nanopartikel auf dem Trägermaterial unter Erhalt geträgerter Cluster oder Nanopartikel.

[35] Verfahren gemäß einem von 28 bis 34 zur Herstellung von Metall- oder Metalloxidnanopartikeln oder -clustern, worin Reaktionslösungen zur Bildung von Clustern oder Nanopartikeln aus der Gruppe der Metalle oder Metalloxide oder Mischformen davon eingesetzt werden.

[36] Verfahren gemäß einem von 28 bis 35 zur Herstellung von Clustern oder Nanopartikeln auf Basis von Übergangsmetallen oder Edelmetallen, worin Reaktionslösungen zur Bildung von Übergangsmetall- oder Edelmetall-basierten Clustern oder Nanopartikeln eingesetzt werden.

[37] Verfahren gemäß einem von 28 bis 36 zur Herstellung von Trägerkatalysatoren.

[38] Verwendung des Verfahrens gemäß 28 bis 36 zur Herstellung von Trägerkatalysatoren.

[39] Cluster oder Nanopartikel erhältlich nach dem Verfahren nach einem von 28 bis 36.

[40] Trägerkatalysatoren erhältlich nach dem Verfahren nach 33 bis 37.

Die vorliegende Erfindung wird nachfolgend im Detail beschrieben.

## DETAILLIERTE BESCHREIBUNG DER ERFINDUNG

Die Erfinder der vorliegenden Erfindung haben zur Lösung der vorstehend beschriebenen Aufgaben eine neue Anlage und ein neues Verfahren zur kontinuierlichen Herstellung von Clustern bzw. Nanopartikeln entwickelt. Die Erfindung basiert auf dem Einsatz einer neuen und verbesserten Anlage, die unter Verwendung von kontinuierlichen Rührkesselreaktoren (Continuous Stirred Tank Reactor; kurz CSTR / CSTRs) im Durchflussverfahren betrieben wird und welche mehrere CSTRs in einer Anordnung einer kontinuierlichen Rührkesselkaskade (CSTR-Kaskade) umfasst. Die Anlage der vorliegenden Erfindung ist hochgradig modular konzipiert, worin die CSTRs in einem oder mehreren Reaktormodulen angeordnet sind. Die einzelnen Reaktormodule (hierin auch kurz "Modul" bzw. "Module") können sowohl hinsichtlich der Anzahl der darin angeordneten CSTRs als auch hinsichtlich ihrer eigenen Anzahl in der Anlage und der Anordnung zueinander innerhalb der Anlage frei variiert werden. Entsprechend weist die Anlage hinsichtlich der Anzahl und Anordnung der einzelnen Reaktormodule und der einzelnen CSTRs innerhalb der Reaktormodule einen modularen und variabel anpassbaren Aufbau auf. Damit ergeben sich die höchstmöglichen Freiheitsgrade zur Gestaltung der

Anlage und Optimierung der Reaktionsbedingungen, um für eine breitest mögliche Variabilität an Syntheseverfahren für die verschiedensten Cluster und Nanopartikel und Cluster- bzw. NanopartikelSysteme einsetzbar zu sein.

Die erfindungsgemäße Anlage umfasst mindestens ein Reaktormodul mit einer Anordnung mehrerer CSTRs in Form einer kontinuierlichen Rührkesselkaskade (CSTR-Kaskade). Im idealen CSTR ist die Reaktionsmasse vollständig homogen (d.h. es gibt keine Temperatur- bzw. Konzentrationsgradienten in den einzelnen CSTRs), wobei die in der erfindungsgemäßen Anlage vorgesehenen einzelnen CSTRs ein nahezu ideales Verhalten zeigen. Das Verhalten der Anlage lässt sich insgesamt für eine unterschiedliche Anzahl an CSTRs innerhalb einer Kaskade durch das ideale Kaskadenmodell beschreiben. Mit zunehmender Aufteilung des gesamten Reaktorvolumens in ideal durchmischte Einzelelemente (bzw. mit steigender Anzahl an CSTRs in einer Kaskade) wird die Verweilzeitverteilung enger und symmetrischer und nähert sich damit dem Verhalten eines idealen Rohrreaktors (Plug Flow Reactor; PFR) an.

Bevorzugt umfasst die erfindungsgemäße Anlage insgesamt mindestens drei CSTRs.

Die erfindungsgemäße Anlage ist darüber hinaus dadurch gekennzeichnet, dass jeder CSTR mit einer eigenen Rührstelle und/oder Rührvorrichtung ausgestattet ist. Dadurch kann eine bestmögliche und gleichmäßige Durchmischung in jedem einzelnen Reaktor (CSTR) gewährleistet werden. Durch die separaten, eigenständigen Rührstellen in jedem CSTR kann insbesondere auch bei kleinen Durchflussgeschwindigkeiten durch starkes und gleichmäßiges Rühren in den einzelnen CSTRs eine nahezu ideale Durchmischung der Reaktionslösung sowie homogene Konzentrations- bzw. Temperaturprofile erreicht werden. Indem in der erfindungsgemäßen Anlage jeder Reaktor (CSTR) mit einer jeweils eigenen Rührvorrichtung betrieben wird, können einheitlichere Verweilzeitverhalten der Reaktionslösungen in den Reaktoren, sowie eine bessere Durchmischung der Reaktionszonen erreicht werden. Außerdem wird die gesamte Anlage und Verfahrensführung im Dauerbetrieb weniger störanfällig, was sie besonders für large-scale Anwendungen im industriellen Maßstab geeignet macht.

Die Rührvorrichtungen der CSTRs der erfindungsgemäßen Anlage umfassen Steuereinheiten zur Einstellung der Rührgeschwindigkeit. Grundsätzlich ist es möglich die Rührvorrichtungen (i) aller CSTRs, (ii) Gruppen von CSTRs (z.B. alle in einem Reaktormodul angeordneten CSTRs) oder (iii) einzelner CSTRs innerhalb der Reaktormodule mit gleichen oder unterschiedlichen Rührgeschwindigkeiten anzusteuern. In einer möglichen Ausführungsform der Erfindung sind die Rührvorrichtungen der in der Anlage angeordneten CSTRs mit einer gemeinsamen Steuereinrichtung versehen.

Es ist aber grundsätzlich auch möglich, in einer weiteren Ausführungsform der Erfindung einzelne Reaktormodule oder alle, oder zumindest ausgewählte Rührvorrichtungen (auch unabhängig von einer Gruppierung der CSTRs innerhalb eines Reaktormoduls) mit eigenen Steuereinheiten zu versehen, die es ermöglichen einzelne Rührvorrichtungen in den CSTRS jeweils unabhängig von den Rührvorrichtungen der übrigen CSTRs im Modul oder in der Anlage anzusteuern. Durch eine individuelle Ansteuerung der Rührvorrichtungen der einzelnen CSTRs ist eine höchstmögliche Individualisierung und Mischungskontrolle innerhalb der Anlage möglich, was die Einsatz- und Optimierungsmöglichkeiten der Anlage für verschiedene Syntheseverfahren und Qualitätsstufen zusätzlich erweitert.

Außerdem sind die CSTRs der Anlage so ausgestaltet, dass ihr jeweiliges Reaktorvolumen unabhängig voneinander variabel verändert werden kann. Es ist somit möglich, dass die einzelnen CSTRs innerhalb der Anlage und/oder innerhalb der einzelnen Reaktormodule jeweils gleiche oder unterschiedliche Reaktorvolumina aufweisen und/oder dass diese auch je nach Einsatzgebiet oder Optimierungsbedarf der Anlage und darin gefahrenen Synthesen individuell verändert werden können. Dies kann beispielsweise über unterschiedlich große Reaktordeckel (Verschlüsse) oder sonstige geeignete technische Maßnahmen oder Bauteile, die geeignet sind das Volumen der einzelnen Reaktoren schnell und ohne große Umbaumaßnahmen zu verändern, erreicht werden. Die in der erfindungsgemäßen Anlage vorgesehenen CSTRs können somit jeweils unabhängig voneinander unterschiedliche Reaktorvolumina aufweisen, wobei diese unterschiedlichen Reaktorvolumina in einzelnen, mehreren oder allen CSTRs in einer erfindungsgemäßen Anlage bevorzugt jeweils über variable Reaktordeckel oder - verschlüsse unterschiedlich einstellbar sind. Unterschiedlich einstellbare Reaktorvolumina ermöglichen die Einstellung und Kontrolle unterschiedlicher Durchflussgeschwindigkeiten und/oder Verweilzeiten innerhalb der Reaktoren. Durch Aufteilung und individuelle Einstellung der Reaktorvolumina können außerdem optimal durchmischte Einzelelemente (CSTRs und CSTR-Kaskaden) in die Anlage implementiert werden und dadurch die Verweilzeiten der Reaktionslösungen in den Reaktoren oder Reaktormodulen einheitlicher und die Verweilzeitverteilungskurve symmetrischer eingestellt werden. Damit bieten die erfindungsgemäßen Anlagen eine weitere Individualisierungs- und Optimierungsmöglichkeit für den größtmöglichen Freiheitsgrad bezüglich der Einsatzgebiete und der in den Anlagen einsetzbaren Syntheseverfahren.

Das Grundprinzip der erfindungsgemäßen Anlage basiert damit also auf einer Anlage, welche ein oder mehrere Reaktormodule umfasst, worin die Reaktormodule unabhängig voneinander jeweils einen oder mehrere kontinuierliche Rührkesselreaktoren (CSTRs) aufweisen und worin mindestens ein Reaktormodul mehr als einen CSTR in einer Anordnung einer kontinuierlichen Rührkesselkaskade (CSTR-Kaskade) aufweist, worin jeder CSTR mit einer eigenen Rührvorrichtung ausgestattet ist, und worin die einzelnen CSTRs so ausgestaltet sind, dass ihr jeweiliges Reaktorvolumen unabhängig voneinander variabel verändert (eingestellt) werden kann, beispielsweise über deren Reaktordeckel bzw. -verschlüsse. Die erfindungsgemäßen Anlagen sind hinsichtlich der Anzahl und Anordnung der einzelnen Reaktormodule sowie der einzelnen CSTRs innerhalb der Reaktormodule modular und variabel ausgestaltet, d.h. wie weisen

einen modularen und variabel anpassbaren Aufbau auf.

Die erfindungsgemäßen Anlagen umfassen in weiteren Ausführungsformen der Erfindung an (mehreren) ausgewählten oder bevorzugt an allen CSTRs Zulaufvorrichtungen (sogenannten Multidosierpunkte) und Ablaufvorrichtungen (sogenannte Multientnahmepunkte oder Ableitungen). Dadurch besteht die Möglichkeit, an den einzelnen (oder an ausgewählten) Reaktoren weitere Reaktionslösung, wie z.B. Metallvorläuferverbindungen, Liganden oder sonstige Reaktionszusätze als Präkursoren (sogenannte Präkursorlösung und/oder Stabilisator-Lösung) individuell zu dosieren und/oder an einzelnen Reaktoren mit einer Probenentnahme (Zwischen-)produkt zu entnehmen, um beispielsweise durch on-line Analytik den Reaktionsverlauf zu verfolgen und eine online-Prozesssteuerung zu ermöglichen. Durch die Möglichkeit der Einspeisung von zusätzlicher Reaktionslösung oder Vorläuferverbindung (Präkursorlösung) an verschiedenen, frei wählbaren, Stellen über solche Multidosierpunkte im Verfahrensverlauf (bis hin zu einer möglichen Einspeisung nach jedem einzelnen CSTR) kann beispielsweise auch ein Abfall des Übersättigungsgrads und eine damit einhergehende Ostwaldreifung bzw. Verbreiterung der Partikelgrößenverteilung bei der Cluster bzw. Nanopartikelbildung verhindert werden. Es ist damit außerdem möglich, die Größe und die Struktur der Partikel flexibel zu steuern. Die Implementierung von solchen Zu- und Ablaufvorrichtungen ist insbesondere für Anlagen interessant, die für Synthesen eingesetzt werden, die auf dem Prinzip des sogenannten Keim-Wachstumsverfahrens basieren und worin zusätzliche Vorläuferverbindung (Präkursor) nach einer sogenannten "Keimbildung" in einem oder mehreren CSTRs in einem ersten Reaktormodul zudosiert wird und so das Wachstum der Partikel gesteuert wird (Einstellung der Partikelgröße von Clustern oder Nanopartikeln des gleichen Materials) und/oder worin eine weitere Reaktionslösung mit anderer Zusammensetzung nach der Keimbildung oder nach einer ersten Wachstumsphase zudosiert wird, um auf einem Kern einer ersten Zusammensetzung eine Schale einer davon abweichenden Zusammensetzung auszubilden (Cluster bzw. Nanopartikel mit Kern-Schale-Struktur bzw. Multischalenpartikel). Die entsprechend herstellbaren gewachsenen Cluster oder Nanopartikel bzw. Cluster oder Nanopartikel mit Kern-Schale-Struktur sind schematisch in Figur 1 dargestellt.

Insbesondere Cluster und Nanopartikeln, insbesondere mit Kern-Schale-Struktur, zeichnen sich durch Abmessungen im Nanometerbereich aus, insbesondere mit Abmessungen kleiner 500 nm, bevorzugter mit Abmessungen kleiner 200 nm und noch bevorzugster mit Abmessungen kleiner 100 nm. Sie sind damit insbesondere geeignet zur Immobilisierung auf einem Trägermaterial und zu Herstellung von Trägerkatalysatoren.

Sofern im Zusammenhang mit der Beschreibung der erfindungsgemäßen Anlage auf die Zuführung einer Reaktionslösung (z.B. Präkursorlösung und/oder Stabilisator-Lösung) verwiesen wird, so können damit auch andere Lösungen umfasst sein, welche für die jeweilige Verfahrensführung erforderlich sind und an geeigneter Stelle im Verfahrensablauf in die Reaktoren eingespeist werden. Die Ansprüche und Ausführungsformen sind insofern nicht als auf die Zuführung von Präkursorlösungen beschränkt zu verstehen.

Die erfindungsgemäßen Anlagen umfassen in weiteren Ausführungsformen der Erfindung außerdem eine oder mehrere voneinander unabhängige Vorrichtungen zum Heizen der CSTRs (Reaktoren) und/oder der Reaktormodule. Im Sinne des modularen Aufbaus und der gewünschten Variabilität innerhalb der erfindungsgemäßen Anlage sind die Heizvorrichtungen so ausgestattet, dass es in einer ersten Variante (i) möglich ist, alle CSTRs in einem Reaktormodul gleichmäßig zu temperieren. In einer solchen Variante wird eine Temperatur innerhalb eines Reaktormoduls eingestellt, wobei in den verschiedenen Reaktormodulen jeweils unterschiedliche Temperaturen eingestellt werden können. Die Temperaturkontrolle erfolgt hier modulweise. In einer zweiten Variante (ii) können innerhalb eines Reaktormoduls unterschiedliche Heizzonen gebildet werden, die eine Temperierung der einzelnen CSTRs innerhalb eines Reaktormoduls unabhängig voneinander ermöglicht. In einer weiteren Variante (iii) können die Heizvorrichtungen so ausgestattet sein, dass alle CSTRs innerhalb der Anlage jeweils unabhängig voneinander temperiert werden können. Diese dritte Möglichkeit bietet unter dem Gesichtspunkt der Variabilität in der Temperaturkontrolle die größte Flexibilität.

In den erfindungsgemäßen Anlagen werden bevorzugt solche Heizvorrichtungen eingesetzt, die in der Lage sind Temperaturen bis 600 °C zu erzielen. Temperaturen dieser Größenordnung sind unter Normaldruck mit den gängigen Lösungsmitteln nicht einstellbar. Für eine Prozessführung bei hoher Temperatur und großem Druck, können zusätzlich Vorrichtungen zur Einstellung geeigneter Drücke in den Reaktionssystemen und Anlagenmodulen vorgesehen werden.

Die erfindungsgemäßen Anlagen sollten jedenfalls in der Lage sein, Temperaturen bis 500 °C, mindestens aber bis 400 °C, bevorzugter bis mindestens 350 °C, auf jeden Fall aber bis mindestens 300 °C zu erzielen.

In besonders bevorzugten Ausführungsformen sollten die Vorrichtungen zum Heizen der CSTRs und/oder der Reaktormodule so ausgestattet sind, dass eine Einstellung eines homogenen Temperaturprofils über alle CSTRs innerhalb eines Reaktormoduls erfolgen kann. Für die Heizprofile eignen sich grundsätzlich alle Materialien, insbesondere Metalle, mit guter Wärmeleitfähigkeit, wie beispielsweise Heizprofile aus Aluminium.

Die erfindungsgemäßen Anlagen können weitere Bauteile oder technische Ausgestaltungen umfassen, welche für die darin gefahrenen chemischen Synthesen notwendig bzw. vorteilhaft sind, wie z.B. Pumpen, Drucksysteme, Steuereinheiten, Kontrollsysteme und sonstige Bestandteile, die insbesondere im industriellen Aufbau bekannt und von Interesse sind.

Im Sinne der vorliegenden Erfindung bezeichnet der Begriff "Reaktormodul(e)" einzelne Einheiten der Anlage,

die eine Kombination von Bauteilen umfassen, mindestens einen oder mehrere kontinuierliche Rührkesselreaktoren (CSTR) sowie Rührvorrichtungen für jeden Reaktor und ggf. eine oder mehrere der weiteren oben beschriebenen Vorrichtungen wie Heizvorrichtung(en), Zu- und/oder Ablaufvorrichtung(en) etc. aufweisen. Ein Reaktormodul wird in der Regel so ausgestaltet und aufgebaut, dass darin ein wesentlicher Verfahrensschritt der auf der Anlage gefahrenen Synthese stattfindet, wie z.B. ein Reaktormodul für einen Schritt der Keimbildungsphase, (mindestens) ein Reaktormodul für einen oder mehrere Schritte von Wachstumsphasen, (mindestens) ein Reaktormodul für einen Schritt einer Schalenbildung (und ggf. Schalenwachstum) bei Multischalenpartikeln, ggf. (mindestens) ein Reaktormodul zur Herstellung von weiteren Partikelbestandteilen wie Trägermaterialien, Coatings oder Funktionalisierungen etc.. Durch den variablen Aufbau der Anlage und die vor und nach den CSTRs vorgesehenen Zu- und Ablaufvorrichtungen ist es grundsätzlich aber auch möglich, die einzelnen Syntheseschritte auf die verschiedenen CSTRs innerhalb eines Reaktormoduls zu verteilen und z.B. alle Syntheseschritte in nur einem Reaktormodul mit einer Mehrzahl von CSTRs durchzuführen.

Bei einem kontinuierlichen Rührkesselreaktor (engl. continuous stirred tank reactor; kurz CSTR; hierin auch als "Reaktor / Reaktoren" bezeichnet), wie er in den erfindungsgemäßen Anlagen vorgesehen ist, handelt es sich um Behälter, Gefäße bzw. Kessel, in die Reagenzien, Reaktanten, Lösungsmittel bzw. die in der Synthese verwendeten Reaktionslösungen hineinfließen, während die im Reaktorbehälter gebildeten Reaktionsprodukte gleichzeitig hinausfließen. CSTRs arbeiten somit im Durchflussverfahren. Auf diese Weise kann der Kesselreaktor für eine kontinuierliche chemische Verarbeitung eingesetzt werden. In der Regel ermöglichen CSTRs mittels guter Durchmischung eine homogene Reaktionsmasse und damit den Betrieb der Anlage unter stationären Bedingungen. Wie oben beschrieben zeichnet sich ein idealer CSTR durch die Abwesenheit von Konzentrations- und Temperaturgradienten aus. Idealerweise ist die Zusammensetzung des aus dem Reaktor hinausfließenden Reaktionsprodukts identisch mit dem Material im Inneren des Reaktors, was jedoch u.a. von der Verweildauer und der Reaktionsgeschwindigkeit abhängt. Für Synthesen mit langsamer Reaktionskinetik, in denen also die Reaktion sehr langsam abläuft, oder wenn unmischbare oder viskose Flüssigkeiten vorliegen, die eine höhere Rührstufe erfordern, bietet das Verbinden mehrerer Rührkesselreaktoren (CSTRs) zu einer sogenannten Kaskade verschiedene Vorteile gegenüber anderen möglichen Fahrweisen. CSTRs werden häufig in der industriellen Verarbeitung verwendet, primär in homogenen Flüssigphase-Flussreaktionen bei denen konstantes Rühren erforderlich ist, insbesondere jedoch auch in der Pharmaindustrie und für biologische Prozesse (z. B. Zellkulturen und Fermenter). Der Vorteil von CSTRs gegenüber Rohrreaktoren (PFRs) liegt darin, dass bei CSTRs die Durchmischung eine wichtige Rolle spielt. Im Gegensatz dazu, handelt es sich bei einem idealen PFR um einen Rohrreaktor, bei dem eine scharfe Fließfront in Form einer Pfropfenströmung vorliegt. Beim idealen PFR liegt an dieser Fließfront sowie an allen möglichen Querschnittsflächen eine perfekte radiale Durchmischung und keine axiale Rückvermischung vor. Ideales Verhalten des PFRs setzt in der Regel eine turbulente Strömung und damit hohe Durchflussgeschwindigkeiten voraus. Um große Verweilzeiten und turbulente Strömungsprofile zu erreichen, sind daher in der Regel lange Rohrreaktoren mit kleinem Durchmesser notwendig. Dies bedingt einen großen Druckabfall im Reaktor. Die Durchmischung und das Strömungsverhalten wird im CSTR durch die Verweilzeitverteilung (engl. residence time distribution; kurz RTD) charakterisiert. Die Verweilzeitverteilung einer Flüssigkeit im CSTR bzw. in einer CSTR-Kaskade kann durch Zugabe einer nichtreaktiven Tracersubstanz über den Zulauf experimentell bestimmt werden. Das Konzentrationsprofil am Auslass kann über die Zeit aufgenommen werden und dadurch die Verweilzeitverteilung bestimmt werden. Für die erfindungsgemäße Anlage wurde ein dem idealen CSTR-Kaskadenmodell ähnliches Verhalten gezeigt.

Durch den modularen und variablen Aufbau der erfindungsgemäßen Anlage können die einzelnen Reaktoren (CSTRs) und Reaktormodule mit (oder ohne) den zusätzlichen oben beschriebenen Vorrichtungen hinsichtlich Anzahl, Reihenfolge und Anordnung im Herstellprozess je nach Einsatzgebiet und intendiertem Produkt flexibel zusammengestellt, kombiniert und angeordnet werden. Durch den modularen Aufbau und die hohe Variabilität ist es außerdem möglich mit der erfindungsgemäßen Anlage die Herstellung der Cluster und/oder Nanopartikel so durchzuführen, dass durch variable Anpassung der Anzahl der CSTRs, durch variable Anpassung der Reaktorverweilzeit in den einzelnen CSTRs jeweils unabhängig voneinander, durch variable Einstellung der Reaktorvolumina in den einzelnen CSTRs jeweils unabhängig voneinander, durch variable Einstellung des Durchflusses durch die Reaktoren, durch variable Zugabe und/oder Abführung von Reaktionslösung aus der Anlage über Multidosierpunkte bzw. Multientnahmepunkte, und Kombinationen der vorgenannten Maßnahmen die Partikelsynthese optimal kontrolliert und gesteuert werden kann.

Insbesondere ist es möglich, die verschiedenen Reaktormodule mit den darin angeordneten CSTRs in serieller oder paralleler oder Kombinationen aus serieller und paralleler Anordnung in der Anlage anzuordnen. Eine serielle Anordnung der Module, d.h. eine Anordnung hintereinander bzw. in Reihe, wird bevorzugt für Herstellverfahren oder Verfahrensschritte gewählt, die auf dem Keim-Wachstumsprinzip basieren. Durch die serielle Anordnung mehrerer erfindungsgemäßer Reaktormodule kann die Größe der Partikel kontrolliert werden sowie Multischalenpartikel hergestellt werden. Eine parallele Anordnung bietet verschiedene Möglichkeiten, einzelne Bestandteile der herzustellenden Nanopartikel gleichzeitig (parallel) in den parallel angeordneten Reaktormodulen herzustellen und anschließend in einem weiteren nachgeschalteten Modul zusammenzuführen. Beispielsweise können in Verfahren, umfassend eine Synthese einer Aktivphase (z.B. Edelmetallnanopartikel) und eine Herstellung eines Trägermaterials (z.B. verschiedene Metalloxide), diese jeweils in verschiedenen Modulen gleichzeitig und kontinuierlich hergestellt und anschließend zur Ausbildung

definierter Trägerkatalysatoren zusammengeführt werden. Beispiele einer Kombination serieller und paralleler Anordnung umfassen damit beispielsweise Herstellverfahren worin in einer seriellen Schaltung von Modulen Cluster oder Nanopartikel (Aktivphase) im Keim-Wachstumsverfahren erzeugt werden und parallel dazu Trägermaterialien, Beschichtungen (Coatings) oder Funktionalisierungsreagenzien hergestellt werden.

Ausführungsformen der Erfindung umfassen somit die hierin beschriebenen Anlagen, worin die Reaktormodule umfassend die CSTR-Kaskade(n) seriell (d.h. hintereinander bzw. in Reihe) angeordnet sind.

Ausführungsformen der Erfindung umfassen außerdem die hierin beschriebenen Anlagen, worin die Reaktormodule umfassend die CSTR-Kaskaden parallel zueinander angeordnet sind.

Gegenstand der Erfindung sind außerdem Ausführungsformen der hierin beschriebenen Anlagen, umfassend sowohl seriell angeordnete Reaktormodule mit CSTR-Kaskaden als auch parallel angeordnete Reaktormodule mit CSTR-Kaskaden.

Die Anzahl der CSTRs innerhalb der Reaktormodule kann mit der darin ablaufenden Reaktion und ihrer spezifischen Reaktionskinetik abgestimmt und variiert werden, so dass der im Reaktormodul durchgeführte Syntheseschritt unter optimierten Strömungsbedingungen und unter optimiertem Verweilzeitverhalten ablaufen kann.

Es ist insbesondere bevorzugt, dass die erfindungsgemäßen Anlagen mindestens eine aus mindestens 3 CSTRs bestehende CSTR-Kaskade aufweisen.

Bevorzugte Ausführungsformen der Erfindung umfassen die hierin beschriebenen Anlagen, worin mindestens ein Reaktormodul eine CSTR-Kaskade aus mindestens 3 CSTRs aufweist. Beispiele umfassen Anlagen, worin mindestens ein Reaktormodul eine CSTR-Kaskade aus 3, 4, 5, 6, 7, 8, 9 oder mehr CSTRs, bevorzugt 3, 4, 5, 6 oder 7 CSTRs, bevorzugter 3, 4 oder 5 CSTRs, aufweist.

Weitere Ausführungsformen der Erfindung umfassen die hierin beschriebenen Anlagen, worin mindestens zwei Reaktormodule unabhängig voneinander jeweils mindestens zwei hintereinander angeordnete CSTRs in einer Anordnung einer CSTR-Kaskade aufweisen. Beispiele umfassen Anlagen, worin mindestens zwei Reaktormodule unabhängig voneinander jeweils 3, 4, 5, 6, 7, 8, 9 oder mehr CSTRs, bevorzugt jeweils 3, 4, 5, 6 oder 7 CSTRs, bevorzugter 3, 4 oder 5 CSTRs, noch bevorzugter 5 CSTRs, hintereinander in einer Anordnung einer CSTR-Kaskade aufweisen.

Weitere Ausführungsformen der Erfindung umfassen die hierin beschriebenen Anlagen, worin mindestens drei Reaktormodule unabhängig voneinander jeweils mindestens zwei hintereinander angeordnete CSTRs in einer Anordnung einer CSTR-Kaskade aufweisen. Beispiele umfassen Anlagen, worin mindestens drei Reaktormodule unabhängig voneinander jeweils 3, 4, 5, 6, 7, 8, 9 oder mehr CSTRs, bevorzugt jeweils 3, 4, 5, 6 oder 7 CSTRs, bevorzugter 3, 4 oder 5 CSTRs, noch bevorzugter 5 CSTRs, hintereinander in einer Anordnung einer CSTR-Kaskade aufweisen.

Weitere Ausführungsformen der Erfindung umfassen die hierin beschriebenen Anlagen, worin

(i) mindestens drei Reaktormodule seriell angeordnet sind, oder

(ii) mindestens zwei Reaktormodule seriell angeordnet sind und zusätzlich mindestens ein Reaktormodul parallel zu den seriell angeordneten Reaktormodulen angeordnet ist, oder

(iii) zwei oder mehr Reaktormodule parallel zueinander angeordnet sind und mindestens ein weiteres Reaktormodul seriell vor oder nach den parallel angeordneten Reaktormodulen angeordnet ist, oder

(iv) mehrere serielle Anordnungen von Reaktormodulen zueinander parallel angeordnet sind.

In einer weiteren Ausführungsform umfasst die erfindungsgemäße Anlage mindestens ein Reaktormodul, welches weniger oder mehr als acht CSTRs aufweist.

Durch die Verwendung von CSTR-Kaskaden innerhalb der Reaktormodule erfolgt eine zunehmende Aufteilung des gesamten Reaktionsvolumens in ideal durchmischte Einzelelemente (CSTRs), wodurch die Verweilzeit im jeweiligen Reaktionsansatz innerhalb eines Reaktormoduls einheitlicher und die Verweilzeitverteilungskurve symmetrischer ist. Dies verändert das reaktionstechnische Verweilzeitverhalten innerhalb eines Moduls so, dass es näherungsweise dem Verhalten eines idealen CSTR Kaskadenmodells entspricht und sich dem des idealen Plug-Flow-Reaktors mit zunehmender Anzahl an Reaktoren zunehmend annähert. Dies ermöglicht eine einfache Implementierung von Synthesen im Satzbetrieb, wodurch dann u.a. auch engere Partikelgrößenverteilungen bei kürzeren Verweilzeiten realisiert werden.

Für Anlagen im industriellen Maßstab können im Prinzip herkömmliche CSTRs, ggf. mit erforderlichen baulichen Modifikationen, verwendet werden. CSTRs für erfindungsgemäße Anlagen in Größenordnungen von Laboranlagen über Miniplants bis hin zu Pilotanlagen können bevorzugt aus Edelstahl gebildet werden.

Die erfindungsgemäßen Anlagen wie hierin beschrieben werden erfindungsgemäß insbesondere für die kontinuierliche Herstellung von Clustern und/oder Nanopartikeln eingesetzt, die ausgewählt sind aus den Gruppen umfassend

(a) Metall- oder Metalloxidpartikel bzw. -cluster oder Mischformen davon,
(b) Übergangsmetall- und insbesondere Edelmetall-basierte Cluster und Nanopartikel,
(c) Ferrite,
(d) Metallpnictide,
(e) Metallchalkogenide,
(f) oxidische Katalysatoren und Trägermaterialien für Katalysatoren, umfassend $SiO_2$, $Al_2O_3$, $Ga_2O_3$, $In_2O_3$, $TiO_2$, $CeO_2$, $La_2O_3$, $ZrO_2$, $V_2O_5$ und deren Mischformen, und
(g) Metallcarbide.

Die erfindungsgemäßen Anlagen ermöglichen durch die hierin beschriebenen Ausgestaltungs-, Konstruktions- und Anordnungsmerkmale die einfache Implementierung vieler literaturbekannter Cluster- und Nanopartikelsynthesen im Bereich von 5 bis 300 °C, insbesondere von Hochtemperatursynthesen (wie beispielsweise thermische Zersetzungsverfahren bzw. Reduktionsverfahren), aus dem Batchbetrieb in eine kontinuierliche Verfahrensweise und damit eine Möglichkeit zum Hochskalieren der mit solchen Batchverfahren erhältlichen Cluster oder Nanopartikelprodukte mit vergleichbarer Qualität. Die erfindungsgemäßen Anlagen eignen sich aufgrund ihres modularen Aufbaus und der flexiblen Ausgestaltbarkeit zur Herstellung von Clustern oder Nanopartikeln verschiedenster Materialien, insbesondere auch von Metall- bzw. Metalloxidpartikeln bzw. -clustern der Übergangsmetalle, mit flexibler Einstellung und Kontrolle der Partikelgröße und besonders enger Größenverteilung bzw. Clustergröße mit definierter Anzahl an Atomen. Außerdem ist auch eine Optimierung der Syntheseparameter im kontinuierlichen Betrieb möglich. Die erfindungsgemäßen Anlagen und darauf fahrbaren Verfahren sind nicht nur, aber besonders, für die Implementierung von Cluster- und Nanopartikelsynthesen mit langsamerer Reaktionskinetik geeignet. Die Verweilzeiten bzw. Reaktionszeiten können über die frei wählbare Anzahl und Anordnung der Reaktormodule, die Anzahl und Anordnung der Reaktoren, die variable Einstellung der Reaktorvolumina und Heizprofile, sowie des Volumen- oder Massenstroms durch die Reaktoren im Durchflussverfahren eingestellt und über die vorgesehenen Zu- und Ablaufvorrichtungen an den Reaktoren kontrolliert, gesteuert und optimiert werden. Damit eignen sich die erfindungsgemäßen Anlagen auch besonders für Verfahren zur Durchführung auf Laboranlagen, in Miniplants oder Pilotanlagen zur Implementierung und Einstellung der gewünschten Syntheseverfahren vor einer Übertragung auf eine nächstgrößere Skala im industriellen bzw. großindustriellen Maßstab. Dies ermöglicht eine enorme Kostenersparnis, da die erfindungsgemäße Anlage es ermöglicht, viele Synthesen im industriellen Maßstab leicht zugänglich zu machen. Die Erfindung stellt damit nicht nur allgemeinen eine Brücke von Satzbetrieb zu einem kontinuierlichen Verfahren her, sondern deckt den gesamten Scale-up Prozess vom Satzbetrieb im Labor Kolben-Maßstab zur kontinuierlichen Miniplant, bis hin zur Pilotanlage ab.

Die hierin beschriebenen erfindungsgemäßen Anlagen eignen sich zur kontinuierlichen Herstellung von Clustern und Nanopartikeln einer Vielzahl von Arten und Materialzusammensetzungen und können entsprechend zu deren Herstellung verwendet werden. Der Begriff Nanopartikel umfasst Nanopartikel im herkömmlichen Sinne (sowie Nanoteilchen und Nanokristalle) und damit Verbünde von einigen wenigen bis einigen tausend Atomen oder Molekülen. Nanopartikel umfasst somit kleinste Feststoffteilchen mit einer Größe, die typischerweise bei 1 bis 100 nm liegt. Insbesondere umfasst der Begriff alle Nanopartikel gemäß ISO/TS 27687:2008 [Nanotechnologies - Terminology and definitions for nano-objects - Nanoparticle, nanofibre and nanoplate].

Es gibt bisher keine einheitliche Definition der IUPAC des Begriffs "Nanopartikel". Die hier beschriebenen Nanopartikel sind nicht auf Partikel mit Abmessungen kleiner 100 nm beschränkt, sondern beinhalten auch größere Partikel. Die hier beschriebenen Nanopartikel beziehen auch Kolloide mit ein, gemäß IUPAC Definition ein Zustand der Unterteilung, wobei die im Medium dispergierten Moleküle oder polynuklearen Teilchen mindestens in einer Dimension Abmessungen im Bereich von 1 nm bis 1 $\mu$m haben.

Im Sinne der vorliegenden Erfindung umfasst der Begriff Nanopartikel auch größere Partikel bis 1 $\mu$m oder größer, sowie Cluster wie nachfolgend näher beschrieben.

Erfindungsgemäß bevorzugt sind Cluster und Nanopartikel mit Abmessungen kleiner 500 nm bzw. noch bevorzugter mit Abmessungen kleiner 200 nm und noch bevorzugter kleiner 100 nm.

Die mit der erfindungsgemäßen Anlage und den erfindungsgemäßen Verfahren herstellbaren Partikel umfassen auch sogenannte Cluster. Cluster sind nach IUPAC-Definition als mehrere, eng beieinanderliegender Metallzentren definiert, die direkte Metallbindungswechselwirkungen oder Wechselwirkungen über einen verbrückenden Liganden haben können, aber nicht unbedingt durch diese Wechselwirkungen zusammengehalten werden müssen. Im Sinne der vorliegenden Erfindung werden Cluster als definierte Mehrkernkomplexe oder als Partikel mit definierter Anzahl an Atomen und kleinen Größen (< 2nm) betrachtet.

Grundsätzlich sind die mit dem erfindungsgemäßen Verfahren oder auf der erfindungsgemäßen Anlage herstellbaren Partikel oder Cluster hinsichtlich ihrer maximalen Größe nicht besonders beschränkt.

Die erfindungsgemäßen Anlagen sind insbesondere geeignet für die Herstellung monodisperser Nanopartikel mit kontrollierter und enger Partikelgrößenverteilung im Bereich von $\pm$ 40 %. In einem bevorzugten Aspekt der Erfindung liegt die Partikelgrößenverteilung der (monodispersen) Nanopartikel im Bereich von $\pm$ 30 %, bevorzugter im Bereich

von ± 20 %, noch bevorzugter im Bereich von ± 10 %.

Unter einem "monodisperen Medium" wird nach IUPAC ein kolloidales System verstanden, in dem alle Teilchen (fast) die gleiche Größe haben. Entsprechend bezeichnet der Begriff "monodispers" im Sinne der Erfindung, dass die erfindungsgemäßen Nanopartikel im Wesentlichen in Form von individualisierten, einzelnen Nanokristallen, mit etwa der gleichen Größe und Form vorliegen. Dabei wird unter den Begriffen "Nanopartikel" oder "Nanokristalle" im Sinne der Erfindung das Vorliegen von Partikeln individueller Nanokristalle oder nicht-agglomerierter Nanokristalle verstanden. Cluster beschreiben im Sinne der Erfindung Verbindungen mit einer definierten Anzahl an Atomen und damit "idealer" Monodispersität.

Die hier angegebenen numerischen Bereiche unterliegen gewissen Schwankungsbreiten, die in einem Bereich von ± 40 % (relative Standardabweichung) abweichen können.

Die Bestimmung der Partikelgrößenverteilung erfolgt mittels Dynamischer Lichtstreuung (engl. dynamic light scattering; kurz DLS), Kleinwinkelröntgenstreuung (engl. small angle X-ray scattering; kurz SAXS) sowie mittels Elektronenmikroskopie (engl. scanning electron microscopy; kurz SEM; oder transmission electron microscopy; kurz TEM) gemäß den in den Beispielen beschriebenen Methoden.

Künstlich hergestellte Nanopartikel werden auch als synthetische Nanopartikel bezeichnet und solche können gezielt mit spezifischen Eigenschaften und/oder Funktionalitäten ausgestattet werden, um sie für die gewünschten Anwendungen nutzbar zu machen. Beispiele von solchen spezifischen Eigenschaften oder Funktionalitäten umfassen elektrische Leitfähigkeit und diverse chemische Reaktivitäten. Im Übrigen wird auf die oben beschriebenen Eigenschaften ausgewählter Cluster bzw. Nanopartikel verwiesen. Cluster und Nanopartikel können entsprechend ihrer chemischen und physikalischen Eigenschaften untergliedert werden. Beispiele von Clustern und Nanopartikeln, die unter Verwendung der erfindungsgemäßen Anlagen herstellbar sind, umfassen solche aus den folgenden Gruppen:

(a) Metall- oder Metalloxidpartikel bzw. -cluster oder Mischformen davon,

(b) Übergangsmetall- und insbesondere Edelmetall-basierte Nanopartikel und Cluster,

(c) Ferrite,

(d) Metallpnictide,

(e) Metallchalkogenide,

(f) oxidische Katalysatoren und Trägermaterialien für Katalysatoren umfassend $SiO_2$, $Al_2O_3$, $Ga_2O_3$, $In_2O_3$, $TiO_2$, $CeO_2$, $La_2O_3$, $ZrO_2$, $V_2O_5$ und deren Mischformen,

(g) Metallcarbide.

Beispiele für Metall- oder Metalloxidpartikel bzw. -cluster oder Mischformen gemäß Gruppe (a) umfassen Nanopartikel oder Cluster auf Basis der unter (b), (c) und (f) aufgeführten Gruppen.

Beispiele für Übergangsmetall- und Edelmetall-basierte Nanopartikel bzw. Cluster gemäß Gruppe (b) umfassen Nanopartikel auf Basis von Edelmetallen und Metallen der Gruppen VIII bis XI des Periodensystems, wie insbesondere Pt-, Pd-, Rh-, Ru-, Ir-, Fe-, Ni-, Co-, Ag-, Cu-, sowie Au-basierte Nanopartikel und deren Legierungen und intermetallische Verbindungen wie beispielsweise $PtNi_3$, $Pt_3Sn$, PdIn, $Pd_2Ga$ etc..

Beispiele für Ferrite gemäß Gruppe (c) umfassen $Fe_3O_4$, $M_AFe_2O_3$ (mit $M_A$: Co, Ni, Mn), dotierte (z.B. mit Sc, In, Ga) und undotierte $M_BFe_{12}O_{19}$ (mit $M_B$ z.B. Ba), $\gamma$-$Pe_2O_3$, $\alpha$-$Fe_2O_3$ sowie Mischformen und Kombinationen dieser Materialien in Form von Kern-Schale-Partikeln.

Der Begriff "Metallpnictide" bezeichnet solche Metall-Verbindungen, die Elemente der Pnictogene wie Nitrid, Phosphid, Arsenid, Antimonid oder Bismutid (Pnictide) als Anion aufweisen. Beispiele für Metallpnictide gemäß Gruppe (d) umfassen GaMe und $InM_c$ ($M_C$: N, P, As, Sb, Bi) sowie Mischformen und Kombinationen dieser Materialien in Form von Kern-Schale-Partikeln.

Beispiele für Metallchalkogenide gemäß Gruppe (e) umfassen $CDM_D$, $ZnM_D$, $PBM_D$, ($M_D$: O, S, Se, Te) sowie Mischformen und Kombinationen dieser Materialien in Form von Kern-Schale-Partikeln.

Beispiele für oxidische Katalysatoren und Trägermaterialien für Katalysatoren gemäß Gruppe (f) umfassen typische oxidische Katalysatoren wie solche auf Basis von $SiO_2$, $Al_2O_3$, $Ga_2O_3$, $In_2O_3$, TiOz, $CeO_2$, $La_2O_3$, $ZrO_2$, $V_2O_5$ und deren Mischformen.

Beispiele für Metallcarbide gemäß Gruppe (g) umfassen WC und MoC.

Wie vorstehend beschrieben können durch entsprechend geeignete Konzipierung der erfindungsgemäßen Anlage Nanopartikel unterschiedlicher Materialzusammensetzung hergestellt werden, sogenannte Nanopartikel mit

Kern-Schale-Struktur oder Multischalenpartikel. Dabei bezeichnet der Begriff "Kern-Schale-Struktur" bzw. "Multischalenpartikel" im klassischen Sinne Nanopartikel mit einem (gewachsenen) Kern einer ersten Materialzusammensetzung, welche von einer Schale einer zweiten (anderen) Materialzusammensetzung umhüllt sind. Die Begriffe umfassen dabei auch jegliche Art Cluster oder Nanopartikel, die mit einer Beschichtung oder einem Coating umhüllt (beschichtet) sind, sowie Cluster oder Nanopartikel auf deren Oberfläche eine Funktionalisierung auf- bzw. eingebracht wird (oberflächenfunktionalisierte Cluster bzw. Nanopartikel).

Beispiele für Nanopartikel mit Kern-Schale-Struktur, beschichtete Cluster oder Nanopartikel und/oder oberflächenfunktionalisierte Cluster bzw. Nanopartikel, die im kontinuierlichen Verfahren gemäß der vorliegenden Erfindung hergestellt werden können, umfassen mit biokompatiblen Stabilisatoren funktionalisierte Cluster oder Nanopartikel der oben genannten Materialklassen (a) bis (e) (beispielsweise mit Dextran und dessen Derivaten umhüllte $Fe_3O_4$ und $\gamma$-$Fe_2O_3$-Partikel) bzw. mit Surfactanten stabilisierte Partikel für technische Ferrofluidanwendungen (z.B. mit Oleylsarkosin umhüllte $Fe_3O_4$ und $\gamma$-$Fe_2O_3$-Partikel). Beispiele sind außerdem multimodale Partikelsysteme für Drug-Targeting, Diagnose und Therapie wie mit therapeutischen Verbindungen funktionalisierte (z.B. cis-$[PtCl_2(NH_3)_2]$) $Fe_3O_4$- und $\gamma$-$Fe_2O_3$-Partikel.

Bevorzugte Beispiele von Nanopartikeln mit Kern-Schale-Struktur umfassen Metall- oder Metalloxidnanopartikel, bimetallische Metall-Metall-Systeme wie Pd@Pt, Pt@Pd, Cu@Pt, Cu@Pd, MoC@Pt und andere, Metall-Metalloxid-Systeme wie beispielsweise Pd@$SiO_2$ oder Pt@$SiO_2$ und Metalloxid-Metalloxid-Systeme wie beispielsweise $Fe_3O_4$@$CoFe_2O_4$.

Zur kontinuierlichen Herstellung von Metall- oder Metalloxidnanopartikeln mit kontrollierter Partikelgröße und/oder mit einer Kern-Schale-Struktur eignet sich insbesondere eine erfindungsgemäße Anlage, die so ausgestattet ist, dass mindestens zwei oder drei Reaktormodule seriell (hintereinander) angeordnet sind und jeweils unabhängig voneinander 3 oder mehr CSTRs aufweisen.

Ein Aspekt der Erfindung betrifft somit auch die Verwendung einer Anlage wie hierin beschrieben zur kontinuierlichen Herstellung von Clustern oder Nanopartikeln wie hierin definiert.

Ein Aspekt der Erfindung betrifft außerdem die Verwendung einer Anlage wie hierin beschrieben zur kontinuierlichen Herstellung von Metall- oder Metalloxidpartikeln bzw. -clustern oder Mischformen davon.

Ein weiterer Aspekt der Erfindung betrifft die Verwendung einer Anlage wie hierin beschrieben zur kontinuierlichen Herstellung von Übergangsmetall und Edelmetall-basierten Nanopartikeln bzw. -clustern.

Ein weiterer Aspekt der Erfindung betrifft die Verwendung einer Anlage wie hierin beschrieben zur kontinuierlichen Herstellung von modifizierten Clustern oder Nanopartikeln, also Clustern oder Nanopartikeln die mit einem weiteren Material im kontinuierlichen Verfahren modifiziert werden, wobei für solche modifizierten Cluster- bzw. Nanopartikelstrukturen die Anlage vorzugsweise so ausgestattet ist, dass mindestens zwei Reaktormodule seriell angeordnet sind und mindestens ein Reaktormodul parallel zu den seriell angeordneten Reaktormodulen angeordnet ist, und worin die Reaktormodule jeweils unabhängig voneinander 3 oder mehr CSTRs aufweisen. Eine derartig ausgestattete Anlage eignet sich insbesondere zur kontinuierlichen Herstellung von Clustern oder Nanopartikeln, welche auf einem Trägermaterial immobilisiert, beschichtet oder oberflächenfunktionalisiert sind.

Ein weiterer Aspekt der Erfindung betrifft die Verwendung einer Anlage wie hierin beschrieben zur kontinuierlichen Herstellung von geträgerten Clustern oder Nanopartikeln, also Clustern bzw. Nanopartikeln, die auf einem Trägermaterial immobilisiert werden, wobei für solche Nanopartikelstrukturen die Anlage vorzugsweise so ausgestattet ist, dass mindestens zwei Reaktormodule seriell angeordnet sind und mindestens ein Reaktormodul parallel zu den seriell angeordneten Reaktormodulen angeordnet ist, und worin die Reaktormodule jeweils unabhängig voneinander 3 oder mehr CSTRs aufweisen. Eine derartig ausgestattete Anlage eignet sich insbesondere zur kontinuierlichen Herstellung von Metall-, Metalloxid- oder Edelmetall-basierten Clustern oder Nanopartikeln immobilisiert auf einem Trägermaterial. Damit eignet sich eine solche Ausführungsform der erfindungsgemäßen Anlage auch insbesondere zur kontinuierlichen Herstellung von Trägerkatalysatoren.

Ein weiterer Aspekt der Erfindung betrifft ein Verfahren zur kontinuierlichen Herstellung von Clustern oder Nanopartikeln (wie hierin definiert) im Durchflussverfahren in einer erfindungsgemäßen Anlage wie hierin beschrieben, wobei das Verfahren die folgenden Schritte umfasst:

(a) Zuführung einer ersten Reaktionslösung zur Herstellung von Clustern oder Nanopartikeln (Präkursor 1) in einen CSTR in einem ersten Reaktormodul umfassend einen oder mehrere hintereinander angeordnete kontinuierliche Rührkesselreaktoren (CSTRs) und Ausbildung von Clustern oder Nanopartikeln aus der Reaktionslösung in einer ersten Keim-Wachstumsphase im Durchfluss durch den einen oder mehrere der CSTRs im Reaktormodul, und

(b) Überführung der im ersten Reaktormodul gebildeten Cluster oder Nanopartikel in ein zweites, seriell dazu angeordnetes, Reaktormodul umfassend einen oder mehrere hintereinander angeordnete kontinuierliche Rührkesselreaktoren (CSTRs), und

(c) Zuführung einer zweiten Reaktionslösung (Präkursor 2) und/oder Stabilisator-Lösung über die Zulaufvorrichtung an einem oder mehreren weiteren CSTRs im ersten oder zweiten Reaktormodul, so dass in den mit Präkursor 1 bespeisten CSTRs Cluster oder Nanopartikel in einer Keim-Wachstumsphase gebildet werden und in den mit Präkursor 2 und/oder Stabilisator-Lösung bespeisten nachfolgend angeordneten CSTRs in einer Partikel-Wachstumsphase eine Zunahme der Cluster- oder Nanopartikelgröße, bzw. Stabilisierung durch Liganden erfolgt,

(d) gegebenenfalls Zuführung einer dritten Reaktionslösung (Präkursor 3) und/oder Stabilisator-Lösung über die Zulaufvorrichtung an einem oder mehreren weiteren CSTRs, die den mit Präkursor 2 bespeisten CSTRs nachfolgend angeordnet sind, im ersten, zweiten oder in einem oder mehreren weiteren Reaktormodulen.

Ein weiterer Aspekt der Erfindung betrifft ein Verfahren zur kontinuierlichen Herstellung von Clustern oder Nanopartikeln (wie hierin definiert) im Durchflussverfahren, wobei das Verfahren die folgenden Schritte umfasst:

(a) Zuführung einer ersten Reaktionslösung zur Herstellung von Clustern oder Nanopartikeln (Präkursor 1 / Reaktand 1) in ein erstes Reaktormodul umfassend einen oder mehrere hintereinander angeordnete kontinuierliche Rührkesselreaktoren (CSTRs) und Ausbildung von Clustern oder Nanopartikeln aus der Reaktionslösung in einer ersten Keim-Wachstumsphase im Durchfluss durch die CSTR-Kaskade im Reaktormodul, und

(b) Überführung der Cluster oder Nanopartikel der Keim-Wachstumsphase aus dem ersten Reaktormodul in ein zweites, seriell dazu angeordnetes, Reaktormodul umfassend einen oder mehrere hintereinander angeordnete kontinuierliche Rührkesselreaktoren (CSTRs), und Zuführung einer zweiten Reaktionslösung (Präkursor 2 / Reaktand 2 / Stabilisator- bzw. Liganden-Lösung), so dass die Cluster oder Nanopartikel aus der Keim-Wachstumsphase aus dem ersten Reaktormodul im Durchflussverfahren unter Zunahme der Cluster- oder Nanopartikelgröße in einer Partikel-Wachstumsphase die zweite CSTR-Kaskade im zweiten Reaktormodul durchlaufen bzw. Stabilisierung durch Liganden erfolgt,

(c) gegebenenfalls Überführung der Cluster oder Nanopartikel aus dem zweiten Reaktormodul in ein drittes Reaktormodul umfassend einen oder mehrere hintereinander angeordnete kontinuierliche Rührkesselreaktoren (CSTRs) und Zuführung einer dritten Reaktionslösung (Präkursor 3 / Reaktand 3 / Stabilisator- bzw. Liganden-Lösung), so dass die Cluster oder Nanopartikel aus dem zweiten Reaktormodul im Durchflussverfahren unter weiterer Zunahme der Cluster- oder Nanopartikelgröße bzw. deren Stabilisierung durch Liganden die weitere CSTR-Kaskade durchlaufen,

(d) gegebenenfalls Wiederholung des Schritts (c).

Darin können die in die Reaktormodule eingeführten Reaktionslösungen (Präkursorlösungen / Stabilisator- bzw. Liganden-Lösung oder sonstige verfahrensrelevante Lösungen) jeweils unabhängig voneinander gleiche oder unterschiedliche Reaktionslösungen (Reaktanden oder sonstige verfahrensrelevante Lösungen) sein.

So werden beispielsweise in einem erfindungsgemäßen Verfahren zur kontinuierlichen Herstellung von Clustern oder Nanopartikeln mit einheitlicher Zusammensetzung und kontrollierter Partikelgröße die Reaktormodule seriell angeordnet und Präkursor 1 und Präkursor 2 sowie ggf. Präkursor 3 enthalten jeweils die gleiche Zusammensetzung, also den gleichen Reaktanden, wodurch Cluster oder Nanopartikel hergestellt werden, welche eine einheitliche chemische Zusammensetzung haben und die durch die Wachstumsschritte im Modul 2 und ggf. Modul 3 durch Zuführung von weiterem (gleichem) Reaktanden kontrolliert reagieren, so dass Cluster oder Nanopartikel mit definierter Partikelgröße entstehen.

Wird in einem solchen vorstehend beschriebenen Verfahren zur kontinuierlichen Herstellung von Clustern oder Nanopartikeln in seriell angeordneten Reaktormodulen wenigstens einer von Präkursor 2 und Präkursor 3 in einer zu Präkursor 1 unterschiedlichen chemischen Zusammensetzung zugeführt, so werden Nanopartikel erhalten, welche eine Kern-Schale-Struktur aufweisen, worin ein (gewachsener) Kern eine Schale unterschiedlicher chemischer Zusammensetzung aufweist.

Ein weiterer Aspekt der Erfindung betrifft ein Verfahren zur kontinuierlichen Herstellung von Clustern oder Nanopartikeln wie hierin beschrieben und umfassend außerdem die gleichzeitige Herstellung eines Modifizierungsmaterials (z.B. Trägermaterial, Coating oder Funktionalisierungsmittel) in einem oder mehreren weiteren Reaktormodulen welche parallel zu den seriell angeordneten Reaktormodulen für die hierin beschriebene Cluster- bzw. Nanopartikelsynthese angeordnet sind, wobei dann anschließend an die Herstellung der Cluster oder Nanopartikel und des Modifizierungsmaterials nach Durchlaufen der jeweiligen parallel angeordneten Reaktormodule mit den CSTR-Kaskaden beides zusammengeführt wird und die Modifizierung der Cluster bzw. Nanopartikel erfolgt. Bevorzugt ist das Modifizierungsmaterial ein Trägermaterial zur Immobilisierung der Cluster bzw. Nanopartikel auf dem Trägermaterial unter Erhalt

geträgerter Cluster oder Nanopartikel. Nach dem gleichen Prinzip können aber auch gecoatete bzw. beschichtete Cluster bzw. Nanopartikel und oberflächenfunktionalisierte Cluster bzw. Nanopartikel im kontinuierlichen Durchflussverfahren hergestellt werden, wobei dann in den parallel angeordneten weiteren Reaktormodulen statt Trägermaterialien Beschichtungslösungen bzw. Funktionalisierungsreagenzien hergestellt werden.

Die hier beschriebenen Verfahren eignen sich insbesondere zur kontinuierlichen Herstellung von Metall- oder Metalloxidnanopartikeln und -clustern, worin dann Reaktionslösungen eingesetzt werden, die zur Bildung von Clustern oder Nanopartikeln aus der Gruppe der Metall- oder Metalloxidpartikel oder Mischformen davon geeignet sind.

Beispiele geeigneter Reaktionen umfassen die Reaktion von $Fe(acac)_3$ in Gegenwart von 1,2-Hexadecandiol, Oleylamin und Ölsäure zu Magnetit- bzw. Maghemit-Nanopartikeln (kurz: NPs) ($Fe_3O_4$ bzw. $\gamma$-$Fe_2O_3$). Weiterhin umfasst sind hier die Synthesen von $MFe_2O_4$ (mit M=Co, Mn, Ni) unter Verwendung der jeweiligen $M(acac)_2$ mit $Fe(acac)_3$ und 1,2-Hexadecandiol:

$$3\,Fe(acac)_3 + \text{1,2-Hexadecandiol} \xrightarrow[\text{OLAC/OLAM}]{} Fe_3O_4\ \text{NPs} \qquad (\mathbf{a})$$

$$Co(acac)_2 + 2\,Fe(acac)_3 + \text{1,2-Hexadecandiol} \xrightarrow[\text{OLAC/OLAM}]{} CoFe_2O_4\ \text{NPs} \qquad (\mathbf{b})$$

$$Mn(acac)_2 + 2\,Fe(acac)_3 + \text{1,2-Hexadecandiol} \xrightarrow[\text{OLAC/OLAM}]{} MnFe_2O_4\ \text{NPs} \qquad (\mathbf{c})$$

Die hier beschriebenen Verfahren eignen sich außerdem auch zur kontinuierlichen Herstellung von Clustern oder Nanopartikeln auf Basis von Übergangsmetallen oder Edelmetallen und Metallen der Gruppen VIII bis XI des Periodensystems, wie insbesondere für Pt- und Pd-basierte Nanopartikel. Hier werden Reaktionslösungen eingesetzt, die zur Bildung von entsprechenden Nanopartikeln geeignet sind.

Ein besonders bevorzugter Aspekt der Erfindung betrifft somit die kontinuierliche Fließsynthese von atomgenauen Platinclustern.

Platin (Pt) ist ein äußerst wichtiges Metall für die Katalyse. Autoabgaskatalysatoren enthalten neben anderen Platingruppenmetallen ca. 2 g Pt, und Pt ist auch ein wesentlicher Bestandteil von Polymerelektrolyt-Brennstoffzellen-Elektrokatalysatoren (PEFC) für die Herstellung von Brennstoffzellen. Da die Pt-Ressourcen insgesamt begrenzt sind (schätzungsweise 16.000 Tonnen auf der Erde) und noch keine unedlen Metalle oder nichtmetallischen Katalysatoren mit gleichwertiger Aktivität und Stabilität als Ersatz gefunden wurden, ist es von entscheidender Bedeutung, die Menge des in diesen und anderen industriellen Anwendungen verwendeten Pt zu verringern. Die Verkleinerung der Katalysatorpartikel auf eine Größe von 1 nm erhöht den Anteil der aktiven Pt-Oberflächenspezies und damit die Katalysatoreffizienz. Bei Größen im Subnanometerbereich (0,5-2 nm) hängt die katalytische Aktivität nicht mehr nur von der Partikelgröße ab, sondern zunehmend von der spezifischen geometrischen und elektronischen Struktur als Cluster (oder superatomare Verbindung). Eine Möglichkeit, die Massenaktivität nanoskaliger Pt-Katalysatoren für die Sauerstoffreduktionsreaktion (ORR) zu steuern, besteht darin, die Anzahl der aktiven Stellen mit einer optimalen Koordinationszahl pro Pt-Masse zu kontrollieren, indem Clusterverbindungen mit einer atomgenauen Größe und einer spezifischen Koordinationsgeometrie als Katalysatorvorläufer verwendet werden. So erreichten beispielsweise größenselektierte $Pt_{20}$-Nanocluster außergewöhnlich hohe, massennormierte Aktivitäten in der Sauerstoffreduktionsreaktion, wenn sie mit hoher Bedeckung auf einem glasartigen Kohlenstoffsubstrat abgeschieden wurden. 1,1 nm große Pt-Nanopartikel mit hoher ORR-Aktivität wurden unter Verwendung der atomar präzisen Pt-Carbonyl-Clusterverbindung $[Pt_9(CO)_{18}][NBu_4]_2$ als Vorläufer erhalten [Nesselberger, M et al.; The effect of particle proximity on the oxygen reduction rate of size-selected platinum clusters. Nat. Mater. 2013, 12 (10), 919-924; Garlyyev, B. et al.; Optimizing the Size of Platinum Nanoparticles for Enhanced Mass Activity in the Electrochemical Oxygen Reduction Reaction. Angewandte Chemie International Edition 2019, 58 (28), 9596-9600.].

Pt-Cluster mit genau definierter Anzahl von Atomen haben in der Grundlagenforschung großes Interesse geweckt. Es wurden mehrere Synthesewege für ligandengeschützte Pt-Cluster beschrieben, wie beispielsweise die Carbonylierung von Pt-Salzen bei atmosphärischem CO-Druck [Ciabatti et al.; Platinum Carbonyl Clusters Chemistry: Four Decades of Challenging Nanoscience. J. Cluster Sci. 2014, 25 (1), 115- 146*]* oder die Pt-Cluster-Synthese worin CO *in situ* durch Pt-katalysierte Zersetzung von Ethylenglykol in Gegenwart von NaOH bei erhöhten Temperaturen gebildet wurde [Nair, L. V. et al.; [Pt17(CO)12(PPh3)8]n+ (n = 1, 2): Synthesis and Geometrie and Electronic Structures. The Journal of Physical Chemistry C 2017, 121 (20), 11002-11009*].* Subnanometer-Cluster mit präzisen Atomzahlen bergen ein immenses Potenzial für Anwendungen in der Katalyse, und die Aussicht, katalytische Prozesse in Abhängigkeit von der Clustergröße zu steuern, ist für die heterogene Katalyse äußerst attraktiv. Unterschiede von nur einem Atom können bereits zu erheblichen Veränderungen der katalytischen Eigenschaften führen, so dass eine Präparation mit atomarer Präzision unerlässlich ist. Durch atomar definierte Cluster mit genau gleicher Größe und starker Trägerwechselwirkung kann das Phänomen der Ostwald-Reifung (d. h. der Massentransport zwischen Teilchen unterschiedlicher Größe oder unterschiedlichen chemischen Potenzials) im Prinzip unterdrückt und eine bessere Sinterstabilität erreicht werden.

Anorganische Cluster werden in der Regel in Batch-Prozessen mit hohen Verdünnungen hergestellt, was das Scale-up dieser Prozesse zeitaufwändig und ihre Reproduzierbarkeit schwierig macht. Die Herstellung von atomar definierten Clustern im Großmaßstab befindet sich noch in einem frühen Stadium und stellt immense Herausforderungen dar, die die praktische Anwendung behindern. Kontinuierliche Verfahren zur Synthese von Nanopartikeln finden unter Verwendung von PFRs und mikrofluidischen Reaktoren mit den damit verbundenen oben beschriebenen Nachteilen statt, und sind in der Regel auch auf Reaktionen mit schneller Reaktionskinetik beschränkt, was die Bandbreite der chemischen Reaktionen einschränkt, die in solchen Systemen durchgeführt werden können. Insbesondere in PFRs bestimmen Parameter wie die Reaktorlänge, der Durchmesser und die Durchflussraten die Reaktionszeit. Für die Synthese von Nanopartikeln und Clustern, bei denen häufig eine langsame Kinetik abläuft und Reaktionszeiten im Bereich von mehreren Minuten bis Stunden erforderlich sind, sind niedrige Durchflussraten oder größere Reaktorlängen erforderlich, um ausreichende Reaktionszeiten zu erreichen. Dies führt in der Regel entweder zu einem hohen Druckabfall, laminaren Strömungsprofilen und/oder schlechter Durchmischung. Kleine Reaktordurchmesser in PFR führen unter diesen Bedingungen häufig zu Fouling, wobei mikrofluidische Reaktoren potenziell noch anfälliger für solche Probleme sind. Noch schwieriger ist es, die Synthese von kleinen Clustern mit einer bestimmten Anzahl von Atomen zu skalieren. Die kontinuierliche Flüssigphasensynthese von Clustern ist weit weniger erforscht, und es gibt nur wenige Beispiele für die Synthese von Clustern in mikrofluidischen oder Kapillarreaktoren. Mit dem erfindungsgemäßen Verfahren und der hierin beschriebenen Anlage konnte überraschend erstmalig die vollständig skalierbare, kontinuierliche Durchflusssynthese für Pt-Cluster mit atomarer Präzision am Beispiel von $[Pt_{17}(CO)_{12}(PPh_3)_8]^{n+}$ (n = 1, 2) in für die praktische Anwendung relevanten Mengen gezeigt werden.

Beispiele geeigneter Reaktionen umfassen die Synthese von Pd NPs, Pd@Pt Kern-Schale NPs durch thermische Zersetzung der $M(acac)_2$ Salze in Gegenwart von Trioctylphosphin unter Verwendung der Lösungsmittel Oleylamin (OLAM) bzw. eines Gemischs aus Oleylamin und Ölsäure:

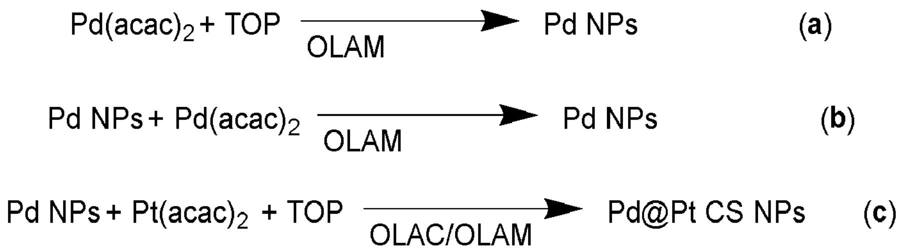


Darin bezeichnet (a) die Reaktion im ersten Reaktormodul (Keimbildungsphase, Pd NPs); (b) bezeichnet die Reaktion im zweiten Reaktormodul unter Zuführung eines gleichen Präkursors 2 (Wachstumsphase); und (c) bezeichnet die Reaktion in einem dritten Reaktormodul unter Zuführung eines anderen Präkursors 3 (Schalenbildung) unter Erhalt eines Kern-Schale-Typ, Pd@Pt-basierten Nanopartikels.

Weiterhin ist die kontinuierliche Synthese von Clustern durch Polysynthese von Metallsalzen von der Erfindung umfasst, beispielsweise $[Pt_{17}(CO)_{12}(PR_3)_8]^{n+}$ (n=1,2) Cluster (mit R: Ph = $C_6H_5$)

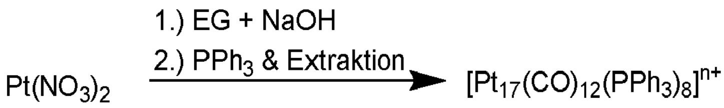


Ein weiterer Aspekt der Erfindung betrifft damit auch ein Verfahren wie hierin beschrieben zur kontinuierlichen Herstellung von Trägerkatalysatoren.

Beispiele geeigneter Reaktionen für das Trägermaterial umfasst Reaktion (a)

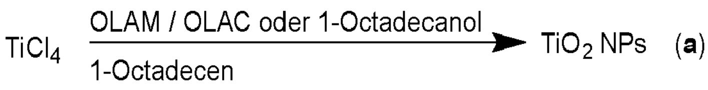


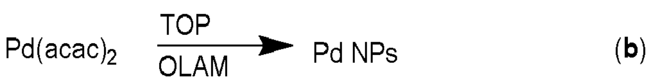

Beispielsweise wird dabei die Synthese der Trägerpartikel (z.B. $TiO_2$-NPs) (a) und der Katalysatorpartikel (z.B. Pd-NPs) (b) in parallel geführten Modulen gleichzeitig durchgeführt und dann die Partikel im dritten Modul zu Trägerkatalysatoren zusammengeführt. In alternativer Fahrweise erfolgt zunächst die Herstellung der Trägerpartikel (a) im ersten Modul. Anschließend wird ein zweiter Präkursor zur Herstellung der Katalysatorpartikel auf den Trägerpartikeln vor dem zweiten Modul dosiert.

Nanopartikel und Cluster, inklusive modifizierte Nanopartikel bzw. Cluster, und Trägerkatalysatoren, die nach den hierin beschriebenen Verfahren erhältlich sind, sind ebenfalls von der Erfindung umfasst.

Die Erfindung wird durch die Abbildungen (Figuren) weiter veranschaulicht, wobei diese keine Einschränkung auf bestimmte Ausführungsformen der Erfindung darstellen.

## BESCHREIBUNG DER FIGUREN

Fig. 1 Schematische Darstellung von Nanopartikeln mit gesteuertem Partikelwachstum bzw. mit Kern-Schale-Struktur, exemplarisch nach Durchlaufen von 3 Reaktormodulen.

Fig. 2 Schematische Darstellung einer erfindungsgemäßen Anlage (1) mit drei Reaktormodulen (2), welche jeweils 5 CSTRs (3) mit variablem Reaktorvolumen (einstellbar über den Reaktordeckel) umfassen, mit Zu- und Ablaufvorrichtungen (4) vor und nach den CSTRs, sowie mit Heizprofilen (5) zur Einstellung einheitlicher Temperaturprofile in jedem Reaktormodul und mit Detailausschnitt eines Reaktormoduls (2). Die erfindungsgemäßen eigenen Rührvorrichtungen für jeden CSTR sind nicht gezeigt, außerdem sind die Bezugszeichen aus Gründen der Übersichtlichkeit nur beispielhaft eingefügt.

Fig. 3 Verweilzeitverhalten eines Reaktormoduls aus 5 CSTRs bei konstanter Rührgeschwindigkeit (650 rpm) und verschiedenen Volumenströmen (1-5 mL $min^{-1}$) - links: Verweilzeitverteilungen E(t); rechts: die Verweilzeitsummenkurve F(t) eines Moduls.

Fig. 4 Verweilzeitverhalten eines Reaktormoduls aus 5 CSTRs bei konstantem Volumenstrom (3 mL $min^{-1}$) und verschiedenen Rührgeschwindigkeiten (0-650 rpm) - links: Verweilzeitverteilungen E(t); rechts: die Verweilzeitsummenkurve F(t) eines Moduls.

Fig. 5 Verweilzeitverhalten eines Reaktormoduls bei konstantem Volumenstrom (3 mL $min^{-1}$) und konstanter Rührgeschwindigkeit (650 rpm) mit verschiedener Anzahl an Reaktoren (1-5 CSTRs) - links: Verweilzeitverteilungen E(t); rechts: die Verweilzeitsummenkurve F(t) eines Moduls.

Fig. 6 A: Exemplarischer hydrodynamischer Durchmesser von kontinuierlich hergestellten Pd-Nanopartikeln mittels Dynamischer Lichtstreuung (DLS) B: Hydrodynamischer Durchmesser von kontinuierlich hergestellten $Pt_{17}(CO)_{12}(PPh_3)_8{}^{2+/1+}$-Clustern mittels Dynamischer Lichtstreuung (DLS) .

Fig. 7 A: Exemplarische Partikelgrößenverteilung von kontinuierlich hergestellten Pd-Nanopartikeln mittels Rasterelektronenmikroskopie; B: Exemplarische Partikelgrößenverteilung von kontinuierlich hergestellten $Pt_{17}(CO)_{12}(PPh_3)_8{}^{2+/1+}$-Clustern mittels Transmissionselektronenmikroskopie (high angle annular darkfield scanning transmission electron microscopy, HAADF-STEM).

Fig. 8 Exemplarische ESI Massenspektren der kontinuierlich hergestellten $Pt_{17}(CO)_{12}(PPh_3)_8{}^{2+/1+}$-Cluster: Experimentell oben; Simulation unten.

Fig. 9 A: Rasterelektronenmikroskopische Aufnahmen von kontinuierlich hergestellten Pd-Nanopartikeln (exemplarisch nach 7 CSTRs; 4 mL $min^{-1}$). B: Transmissionselektronenmikroskopie-Aufnahmen (high angle annular darkfield scanning transmission electron microscopy, HAADF-STEM) von kontinuierlich hergestellten $Pt_{17}(CO)_{12}(PPh_3)_8{}^{2+/1+}$-Clustern mit unterschiedlicher Vergrößerung (Maßstabsbalken 2 nm, 5 nm und 10 nm).

Fig. 10 Darstellung eines Prozessfließdiagramms zur erfindungsgemäßen kontinuierlichen Nanopartikelsynthese.

## BEZUGSZEICHEN

(1) erfindungsgemäße Anlage
(2) Reaktormodul(e)
(3) kontinuierliche(r) Rührkesselreaktor(en) / CSTR(s)
(4) Zu-/Ablaufvorrichtung(en) vor und nach den CSTRs für Reaktandenzugabe / Probenentnahme
(5) Heizvorrichtung(en) / Heizprofil(e)

## BEISPIELE

Die besonders bevorzugten Ausgestaltungen der Erfindung und deren Vorteile können wie folgt zusammengefasst werden:
Ein besonderer Aspekt der Erfindung betrifft die kontinuierliche Herstellung von Nanopartikeln mit Kern-Schale-Struktur, welche sich durch Ihre Dimension im Nanometerbereich auszeichnen. Mit der erfindungsgemäßen Anlage und dem hierin beschriebenen kontinuierlichen Herstellverfahren kann insbesondere die Verweilzeit bzw. die Reaktionszeit in dem erfindungsgemäßen Prozess / Aufbau variabel über die Anzahl der Reaktoren, das Reaktorvolumen und den Fluss eingestellt werden. Das Reaktorvolumen der CSTR-Reaktoren lässt sich dabei z.B. über verschieden große Deckel variieren und damit die Verweil- bzw. Reaktionszeit in einem weiten Bereich einstellen. Der Aufbau der erfindungsgemäßen Anlage ist modular mit Multidosierpunkten, um die Größe und Größenverteilung sowie die Zusammensetzung der Nanopartikel gezielt einzustellen. Eine enge Partikelgrößenverteilung wird in dem erfindungsgemäßen Prozess zur Herstellung von Nanopartikeln mit Kern-Schale-Struktur sowohl durch die Trennung der Reaktionsvorstufen-Bildung, der Nukleations- und Wachstumsphase (in den verschiedenen CSTR) als auch durch das gezielte Zudosieren von Metallvorläuferverbindung über eine Multipunkt-Dosiervorrichtung in der Anlage erreicht. Durch Dosierung der Metallvorläuferverbindung an den verschiedenen Stellen im Prozess wird der Übersättigungsgrad gezielt eingestellt. Dabei wird der sogenannte Fokussierungseffekt, ein kinetisch getriebener Prozess, gezielt durch die Reaktionsführung in der Anlage ausgenutzt, der die Varianz der Nanopartikel-Größenverteilung während der Wachstumsphase verringert. Er wirkt bei diffusionskontrolliertem Wachstum und hohen Übersättigungsgraden. Im Gegensatz dazu tritt Ostwald-Reifung, die die Varianz der Partikelgrößenverteilung vergrößert, insbesondere bei geringer Übersättigung und kleinen Nanopartikel -Größen auf (Gibbs-Thomson-Effekt). Zusätzlich ist der Prozess erweiterbar auf eine kontinuierliche Herstellung von nanopartikelbasierten Trägerkatalysatoren, beispielsweise indem zwei Reaktormodule bestehend aus mehreren CSTRs in Reihe geschaltet und so sowohl zur Nanopartikel-Synthese als auch zur parallelen Herstellung der Träger bzw. zum Aufbringen der Nanopartikel auf einem suspendierten Trägermaterial in einem kontinuierlichen Verfahren genutzt werden.
Erfindungsgemäße bevorzugte Verfahren nutzen Reaktionen basierend auf thermischer Zersetzung/Reduktion. Bei solchen Reaktionstypen ist es aufgrund der langsam ablaufenden Reaktionskinetik wichtig, die Verweilzeit in den Reaktoren gezielt einzustellen und zu kontrollieren, was durch die erfindungsgemäßen Anlagen und Verfahren möglich ist und weshalb sich diese insbesondere für solche Reaktionstypen besonders eignen.
Die Erfindung wird durch die folgenden Beispiele näher beschrieben, ohne darauf beschränkt zu sein.

<u>1. Ausführungsbeispiel einer erfindungsgemäßen Anlage zur Herstellung eines (Edel)-metallbasierten Nanopartikelsystems</u>

### Beschreibung der Anlage:

Die Anlage ist variabel und modular aufgebaut, um in aufeinanderfolgenden Schritten zunächst die Keimbildung und dann das Wachstum der Keime zu Nanopartikeln mit verschiedenen (Edel-)Metallen zu ermöglichen.
Die Anlage umfasst drei Reaktormodule mit jeweils fünf CSTRs (Rührkesseln), die zu einer Kaskade zusammengefasst sind. Nach jedem Reaktor (CSTR) besteht die Möglichkeit der Probennahme. Weiterhin besteht die Möglichkeit, nach jedem Reaktormodul entweder Proben zu entnehmen oder weiter verschiedene Vorläuferverbindungen (Präkursorlösung) bzw. Stabilisator-Lösung zuzugeben. Der Aufbau der Anlage zur kontinuierlichen Nanopartikel-Synthese ist in Figur 2 und Figur 10 schematisch dargestellt.

### Reaktordesign:

Die verwendete Anlage ist schematisch in Figur 2 und Figur 10 dargestellt. Das Reaktorvolumen der einzelnen Rührkessel kann durch den zylinderförmigen Deckel variabel zwischen 5 und 10 mL eingestellt werden. Jeder Reaktor

verfügt über eine 1/8" Zu- und Ableitung. Die Reaktoren sind mit Swageloc® T-Verschraubungen verbunden, um Proben für die Kontrolle des Reaktionsverlaufs und zur Prozesskontrolle entnehmen zu können. Zusammengefasst zu einem Reaktormodul befinden sich bis zu fünf Reaktoren (CSTRs) in einem Aluminiumblock, welcher als Heizvorrichtung verwendet wird. Stirnseitig wird der Aluminiumblock mit vier 200 W Heizelementen von HORST GmbH bis zur Zieltemperatur von 290 °C beheizt. Die Temperaturüberwachung/ - regelung der Heizelemente erfolgt für jedes Modul mit einer eigenen Steuereinheit in Form von je einem HT MC 11 Regler von HORST GmbH. Die Wände der Module sind mit 1,5-2 cm Vermiculite® Isolationsplatten von K. Hoffmann GmbH versehen und der Zwischenraum zwischen den Reaktoren ist mit Luft gefüllt, um über alle fünf Reaktoren eines Moduls ein homogenes Temperaturprofil zu erzeugen. Durch Verwendung von Aluminiumprofilen findet ein guter Wärmeübertrag auf die Reaktoren statt, ohne dass ein Temperaturgradient zwischen den Reaktoren entsteht.

**Verweilzeitverhalten:**

Von den Reaktoren wurde konduktometrisch die Verweilzeitverteilung bestimmt. Dabei wurde (1 mL; 1 mol $L^{-1}$) NaOH-Lösung über eine Spritze als Stoßmarkierung injiziert. Mit einer HPLC-/Dosierpumpe 3350 von BISCHOFF Analysentechnik und -geräte GmbH (Pumpenkopf A) wurde destilliertes Wasser bei Volumenströmen von 1-5 mL $min^{-1}$ durch die Rührkesselkaskade gepumpt. Anschließend floss die Flüssigkeit durch eine Kapillarflusszelle von Malvern Panalytical, an der eine äußere Spannung von 8,5 V anlag. Die äußere Spannung wird mit einem Labornetzteil NSP3630 von Manson (1-36 V / DC 3 A max) bereitgestellt. Über die Zeit wurde sowohl die Stromstärke $\mu$A als auch die Spannung in Volt mit einem TrueRMS-Tischmultimeter UT803 von UNI-TREND Technology (China) CO. LTD. am PC mit der mitgelieferten Software (UT803 Interface Program v. 1.1) aufgezeichnet. Aus der Stromstärke I und der Spannung U konnte mit Hilfe des Ohm'schen Gesetzes der Widerstand R erhalten werden:

$$R = \frac{U}{I}$$

$$\sigma = \frac{1}{R} \cdot \frac{l}{A}$$

Für das Verweilzeitverhalten wurden die Totvolumina der Rohre abgezogen und die Kurven zwischen [0 1] normiert.

$$\theta = \frac{t}{\tau}$$

Das Verweilzeitverhalten wurde exemplarisch für ein Modul untersucht und ist wegen der modularen Bauweise repräsentativ für die gesamte Anlage. In Figur 3 sind die Verweilzeitverteilungen E(t) und die Verweilzeitsummenkurve F(t) eines Moduls mit 5 Reaktoren bei verschiedenen Volumenströmen im Vergleich zum idealen Rührkesselkaskaden Modell dargestellt. Der Volumenstrom wurde zwischen 1 mL $min^{-1}$ und 5 mL $min^{-1}$ variiert, wobei die Rührgeschwindigkeit bei 650 rpm konstant gehalten wurde. Als Rühreinheit wurde ein Mehrstellen-Magnetrührer RO 15 von IKA®-Werke GmbH & CO. KG verwendet.

Für die untersuchten Volumenströme konnte ein dem theoretischen Kaskaden-Model ähnliches Verhalten zu beobachtet werden.

Weiterhin wurde der Einfluss der Rührgeschwindigkeit auf das Verweilzeitverhalten und die Durchmischung untersucht. In Figur 4 sind die Verweilzeitverteilungen E(t) und die Verweilzeitsummenkurve F(t) eines Moduls mit 5 CSTRs bei verschiedenen Rührgeschwindigkeiten und einem konstanten Volumenstrom von 3 mL $min^{-1}$ gezeigt. Die Rührgeschwindigkeit wurde zwischen 0 rpm und 650 rpm variiert.

Aus dem Verweilzeitverhalten geht hervor, dass bei ausgeschaltetem Rührer kein ideales Verhalten vorliegt. Ab einer Rührgeschwindigkeit von 100 rpm nähert sich das Verweilzeitverhalten dem idealen Verhalten des Kaskadenmodells an. Daraus lässt sich ab einer Rührgeschwindigkeit von bereits 100 rpm eine gute Durchmischung ableiten.

Zudem wurde das Verweilzeitverhalten eines Moduls mit verschiedener Anzahl an CSTRs untersucht. In Figur 5 sind die Verweilzeitverteilungen E(t) und die Verweilzeitsummenkurve F(t) eines Moduls mit gleicher Rührgeschwindigkeit (650 rpm) und einem konstanten Volumenstrom (3 mL $min^{-1}$) für 1-5 CSTRs gezeigt.

Die Versuche zum Verweilzeitverhalten zeigen, dass das gewählte System reaktionstechnisch das ideale Kaskaden-Modell näherungsweise abbildet.

**Analysenmethoden:**

Die in der getesteten Anlage hergestellten Pd-Nanopartikel wurden mittels Dynamischer Lichtstreuung hinsichtlich der Partikelgrößenverteilung untersucht. Das Ergebnis zeigt Figur 6A (7 CSTRs auf 2 Module verteilt; 4 mL $min^{-1}$).

Die Messung erfolgte mit folgender Methode:

Der hydrodynamische Durchmesser der Partikel wurde mit dynamischer Lichtstreuung (DLS) mit einem Zetasizer Nano ZS (Malvern Instruments, Großbritannien) bei 633 nm mit nichtinvasiver Rückstreuung (engl. non-invasive backscatter detection; kurz NIBS, bei einem Winkel von 173°) bestimmt. Dazu wurden die Proben mit Hexan verdünnt, in Quarzküvetten gefüllt (Schichtdicke von 10 mm; Hellma Analytics, Deutschland), 8 mal mit 12-25 Durchläufen gemessen und die Anzahl gemittelt.

Die in der getesteten Anlage hergestellten Pd-Nanopartikel wurden mittels Rasterelektronenmikroskopie hinsichtlich der Partikelgrößenverteilung untersucht. Das Ergebnis zeigt Figur 7A.

Die Untersuchung erfolgte unter den folgenden Bedingungen:

Die Größe und Morphologie der Nanopartikel wurden mittels Rasterelektronenmikroskopie (kurz REM) mit einem GeminiSEM500 mit Schottky-Feldemissionskathode (ZEISS AG, Deutschland) analysiert. Für die Analyse wurde ein Tropfen (1-4 $\mu$L) der Nanopartikeldispersion auf mit einer amorphen Kohlenstoffschicht beschichteten, 400 mesh Cu-Netzchen (Plano GmbH, Deutschland; 200 Quadratmeter / mesh (74 $\mu$m)) aufgebracht und anschließend an Luft getrocknet. Im Allgemeinen wurden die Partikelgrößen und Größenverteilungen statistisch aus den REM-Bildern auf der Grundlage von mindestens 100 Partikeln bestimmt (Software ImageJ).

Außerdem zeigt Figur 9A eine rasterelektronenmikroskopische Aufnahme von kontinuierlich hergestellten Pd-Nanopartikeln (exemplarisch für 2 Module mit insgesamt 7 CSTRs; 4 mL $min^{-1}$). Die Untersuchungen zeigen exemplarisch, dass mit der erfindungsgemäßen modularen Anlage die kontinuierliche Herstellung von EdelmetallNanopartikeln mit enger Partikelgrößenverteilung in einer CSTR-Kaskade möglich ist.

Die in der getesteten Anlage hergestellten Pd-Nanopartikel wurden mittels Kleinwinkel-Röntgenstreuung (engl. small angle X-ray scattering; kurz SAXS) hinsichtlich der Partikelgrößenverteilung analysiert.

Die Untersuchung erfolgte unter den folgenden Bedingungen:

Kleinwinkel-Röntgenstreuung wurden in Transmission als Pulver zwischen Kapton® Polyimid Folien (Dicke 7,5 $\mu$m; Durchmesser 63,5 mm) von Chemplex® Industries Inc. mit einem PANalytical X'PERT Pro Röntgendiffraktometer (PANalytical, Niederlande; Cu-K$\alpha$-Strahlung ($\lambda$ = 1,541 Ä); Ni-Filter); mit einem fokussierenden Spiegel (Cu) am einfallenden Strahl und am gestreuten Strahl mit einem PreFIX Modul FRS mit FASS und einem offenen um 90° gedrehten X'Celerator Detektor durchgeführt. Die Kleinwinkelstreuung wurde von 0° bis 5° über einen Zeitraum von 20 min aufgenommen. Die Analyse wurde mit Hilfe einer erweiterten SAXS-Datenanalysesoftware EasySAXS 2.2 (PANalytical, Niederlande) durchgeführt.

Figur 10 zeigt außerdem ein beispielhaftes Prozessablaufdiagramm in Form eines Fließschemas zur erfindungsgemäßen kontinuierlichen Nanopartikel Synthese.

Die in der getesteten Anlage hergestellten $[Pt_{17}(CO)_{12}(PPh_3)_8]^{n+}$-Cluster wurden mittels ESI Massenspektrometrie (engl. an electrospray ion source; kurz ESI) hinsichtlich der Massenzahlen analysiert. Das Ergebnis zeigt Figur 8.

Hochauflösende Massenspektren wurden auf einem Bruker timsTOF-MS mit einer Massenauflösung von mehr als 25000 aufgenommen. Kurz gesagt besteht das timsTOF aus einer Elektrospray-lonenquelle (ESI), einem lonenmobilitätsspektrometer (TIMS), einem Quadrupol-Massenfilter (QMS), einer Kollisionszelle (einem zweiten Quadrupol) sowie einem orthogonal beschleunigten Flugzeit-Massenspektrometer mit Reflektron (oa-ReTOF). Typische Messbedingungen waren wie folgt: Probenkonzentration: 40-100 nmol $L^{-1}$ in Toluol/Methanol (1:1), Flussrate: 3$\mu$L $min^{-1}$, Kapillarspannung: 4,5 kV, Zerstäuber: 0,3 bar, Trockengas: 2 L $min^{-1}$, Trockentemperatur: 300 °C, lonenenergie: 1 eV, Kollisionsenergie: 1 eV, Transferzeit: 200 $\mu$s, Vorimpuls-Speicherzeit: 20 $\mu$s und Scan-Zeit: 1 ms.

Die in der getesteten Anlage hergestellten $Pt_{17}(CO)_{12}(PPh_3)_8{}^{2+/1+}$-Cluster wurden mittels Dynamischer Lichtstreuung hinsichtlich der Partikelgrößenverteilung untersucht. Das Ergebnis zeigt Figur 6B.

Die in der getesteten Anlage hergestellten $Pt_{17}(CO)_{12}(PPh_3)_8{}^{2+/1+}$-Cluster wurden mittels Transmissionselektronenmikroskopie (engl. high angle annular darkfield - scanning transmission electron microscopy, kurz: STEM-HAADF) hinsichtlich der Partikelgrößenverteilung untersucht. Das Ergebnis zeigt Figur 7B.

Außerdem zeigt Figur 9B eine STEM-HAADF-Aufnahme von kontinuierlich hergestellten $Pt_{17}(CO)_{12}(PPh_3)_8{}^{2+/1+}$-Clustern in verschiedenen Auflösungen. Die Untersuchungen zeigen exemplarisch, dass mit der erfindungsgemäßen modularen Anlage die kontinuierliche Herstellung von Pt-Clustern mit enger Partikelgrößenverteilung in einer CSTR-Kaskade möglich ist.

**Versuchsdurchführung - kontinuierliche Nanopartikelsynthese:**

Die variable, modulare Syntheseanlage und die kontinuierliche Synthese von Nanopartikeln wird im Folgenden exemplarisch für Palladiumnanopartikel aus Palladiumacetylacetonat mit Kern-Schale-Struktur unter Einsatz von zwei Modulen aus jeweils fünf CSTRs beschrieben:

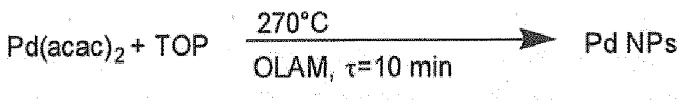


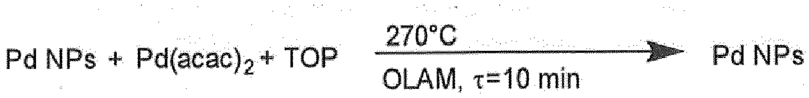


Für die kontinuierliche Nanopartikelsynthese wurden zunächst unter inerten Bedingungen 200 mL Oleylamin (kurz OLAM) im Vakuum bei 60 °C für 30 min entgast. Die Lösung wurde anschließend mit Argon überströmt und zum Spülen und Anfahren der Anlage verwendet. Exemplarisch wurde für den hier beschriebenen Versuch die Anlage mit zwei in Reihe geschalteten Reaktormodulen betrieben. Jedes dieser Reaktormodule war hier aus fünf in Reihe geschalteten kontinuierlich betriebenen Rührkesseln (CSTRs) aufgebaut, so dass die CSTR-Kaskade im beschriebenen Versuch in Summe aus zehn CSTRs bestand.

Für den Versuch wurde eine Präkursorlösung aus 700 mL OLAM angesetzt. Hierfür wurden 700 mL OLAM in einem 1000 mL Zwei-Hals-Rundkolben mit Hahn vorgelegt. Anschließend wurden 4,7858 g $Pd(acac)_2$ hinzugegeben. Die Lösung wurde im Vakuum auf 60 °C erhitzt und für 30 min bei 800 rpm entgast. Nach 30 min wurde Argon eingeleitet. Im Argon-Gegenstrom wurden 35 mL Trioctylphosphin (kurz TOP) zugegeben und für weitere 60 min bei 60 °C und 800 rpm gerührt. Die Lösung wurde auf Raumtemperatur abgekühlt und unter Argon-Atmosphäre in die Anlage überführt. Die hergestellte Lösung wurde in einem Vorlagenbehälter im Folgenden als Präkursor 1 und Präkursor 2 verwendet und während der Reaktion weiterhin mit Argon überströmt.

Die Anlage wurde zunächst mit OLAM befüllt und jedes Reaktormodul blasenfrei gemacht. Anschließend wurden die Module verbunden und die Anlage mit Vermiculite® zur Wärmedämmung verschlossen. Die Anlage (Modul 1 und Modul 2) wurde auf 270 °C erhitzt. Während des Aufheizens wurde ein OLAM-Volumenstrom mit HPLC Pumpe 1 von 2 mL $min^{-1}$ bereitgestellt.

Der Aufheizvorgang von 20 auf 270 °C wurde gestartet und die finale Temperatur innerhalb von etwa 45 bis 50 Minuten erreicht. Anschließend erfolgte die Zugabe von Präkursor 1 mit HPLC Pumpe 1 mit 2 mL $min^{-1}$ (Figur 10). Nach ca. 70 min war der stationäre Zustand für Modul 1 und 2 erreicht. Sobald der stationäre Zustand erreicht war, wurde am Auslass (nach Modul 2, siehe Figur 10) eine Probe entnommen. In einem weiteren Versuch, wurde zusätzlich Präkursor 2 über HPLC Pumpe 2 mit 2 mL $min^{-1}$ nach Modul 1 bzw. vor Modul 2 dosiert. Daraus ergibt sich ein Gesamtvolumenstrom von 4 mL $min^{-1}$ in Modul 2 der Anlage bzw. am Auslass der Anlage. Der stationäre Zustand für Modul 2 wurde nach weiteren etwa 45 bis 50 Minuten erreicht. Weiterhin wurden beispielhaft Proben (ca. 25 mL) jeweils nach jedem einzelnen CSTR entnommen und direkt im Eisbad gekühlt.

**Aufarbeitung der Proben:**

Von den Proben wurde je eine Rohprobe von 1 mL zurückgestellt. Die Partikel wurden durch folgende, wiederholte Schritte aufgearbeitet, d.h. Fällung mit Ethanol (25-30 mL), Abzentrifugieren, Abdekantieren des Überstands und Redispergieren in Chloroform (2-3 mL). Schließlich wurden die Partikel in Form eines Pulvers durch Trocknen bei 80 °C isoliert. Die Proben wurden für DLS-Messungen (engl. dynamic light scattering) in Hexan dispergiert und mit einem Chromafil® PTFE-20/25 Spritzenfilter (Porengröße 0,2 μm) von Macherey-Nagel GmbH & Co. KG filtriert. Mit den Probelösungen wurde jeweils ein Kohlenstoff beschichtetes Cu-Netz für TEM/REM-Untersuchungen präpariert. Beispielhaft ist eine Aufnahme mit dem Rasterelektronenmikroskop der Pd-Partikel nach 7 CSTRs in Figur 9A gezeigt.

**Versuchsdurchführung - kontinuierliche Clustersynthese:**

Die kontinuierliche Synthese von Clustern in der beschriebenen Anlage wird im Folgenden exemplarisch für $[Pt_{17}(CO)_{12}(PPh_3)_8]^{n+}$ aus Platinnitrat und Triphenylphosphin unter Verwendung eines Moduls bestehend aus vier

CSTRs beschrieben:

$$Pt(NO_3)_2 \xrightarrow{\text{1.) EG + NaOH} \quad \text{2.) } PPh_3 \text{ \& Extraktion}} [Pt_{17}(CO)_{12}(PPh_3)_8]^{n+}$$

Für die kontinuierliche Clustersynthese wurden zunächst unter inerten Bedingungen 200 mL Ethylenglycol (kurz EG) im Vakuum bei 60 °C für 30 min entgast. Die Lösung wurde anschließend mit Argon überströmt und zum Spülen und Anfahren der Anlage verwendet. Exemplarisch wurde für den hier beschriebenen Versuch die Anlage mit einem Reaktormodul mit vier CSTRs betrieben.

Für den Versuch wurde eine Präkursorlösung 1 (Metallsalz) aus 500 mL Ethylenglycol angesetzt. Hierfür wurden 500 mL EG in einem 1000 mL Zwei-Hals-Rundkolben mit Hahn vorgelegt. Anschließend wurden 0,6385 g $Pt(NO_3)_2$ und 1,6005 g Natriumhydroxid hinzugegeben. Die Lösung wurde im Vakuum für 60 min entgast und dann wurde Argon eingeleitet. Die Lösung wurde unter Argon-Atmosphäre in die Anlage überführt. Die hergestellte Lösung wurde in einem Vorlagenbehälter im Folgenden als Präkursor 1 verwendet und während der Reaktion weiterhin mit Argon überströmt. Eine weitere Präkursorlösung 2 (Ligand) wurde aus 160 mL Aceton und 8,3933 g Triphenylphosphin hergestellt und wie zuvor bei Präkursorlösung 1 entgast und in die Anlage überführt.

Die Anlage wurde zunächst mit Ethylenglycol befüllt und jedes Reaktormodul blasenfrei gemacht. Anschließend wurden die Module verbunden und die Anlage mit Vermiculite® zur Wärmedämmung verschlossen. Die Anlage bzw. Modul 1 wurde auf 120 °C erhitzt. Während des Aufheizens wurde ein Ethylenglycol-Volumenstrom mit HPLC Pumpe 1 von 3 mL $min^{-1}$ bereitgestellt.

Der Aufheizvorgang von 20 auf 120 °C wurde gestartet und die finale Temperatur innerhalb von etwa 25 Minuten erreicht. Anschließend erfolgte die Zugabe von Präkursor 1 mit HPLC Pumpe 1 mit 3 mL $min^{-1}$ (Figur 10). Nach ca. 40 min war der stationäre Zustand für Modul 1 erreicht. Sobald der stationäre Zustand erreicht war, wurde am Auslass (nach Modul 1, siehe Figur 10) in einem Sammelbehälter die Reaktionslösung auf Raumtemperatur abgekühlt. Präkursor 2 (Ligand) wurde über HPLC Pumpe 2 mit 1,2 mL $min^{-1}$ unter Rühren in den Sammelbehälter dosiert.

**Aufarbeitung der Cluster nach Synthese:**

Die $Pt_{17}$-Cluster wurden durch folgende, Schritte aufgearbeitet: Extraktion mit einer Mischung aus Dichlormethan und Wasser (1:1), Verdampfung der org. Phase am Rotationsverdampfer (100-200 mbar; 20°C) und anschließend wiederholtes Waschen und Zentrifugieren (7830 rpm) der Cluster mit Wasser und Methanol. Schließlich wurden die Cluster in Form eines Pulvers durch Trocknen bei 30 °C im Vakuum isoliert.

Beispielhaft sind die Charakteristika der $Pt_{17}$-Cluster nach vier CSTRs in Figur 8 anhand einer ESI Massenspektrometrie Analyse gezeigt.

Weitere Einzelheiten zur Versuchsdurchführung und den erzielten Ergebnissen finden sich in der Publikation von Schmitt et al.; "Continous flow synthesis of atom-precise platinum clusters"; ChemRxiv; DOI 10.26434/chemrxiv-2023-m8t5r; 24. November 2023*)*, welche hiermit vollumfänglich umfasst wird.

**Patentansprüche**

1. Anlage zur kontinuierlichen Herstellung von Clustern und/oder Nanopartikeln, welche ein oder mehrere Reaktormodule umfasst, worin die Reaktormodule unabhängig voneinander jeweils einen oder mehrere kontinuierliche Rührkesselreaktoren (Continuous Stirred Tank Reactors; CSTRs) aufweisen und worin mindestens ein Reaktormodul mehr als einen CSTR in einer Anordnung einer kontinuierlichen Rührkesselkaskade (CSTR-Kaskade) aufweist, worin jeder CSTR mit einer eigenen Rührvorrichtung ausgestattet ist, und worin die einzelnen CSTRs so ausgestaltet sind, dass ihr jeweiliges Reaktorvolumen unabhängig voneinander variabel verändert werden kann.

2. Anlage gemäß Anspruch 1 zur kontinuierlichen Herstellung von Clustern und/oder Nanopartikeln, wobei die Cluster und/oder Nanopartikel ausgewählt sind aus den Gruppen umfassend

   (a) Metall- oder Metalloxidpartikel bzw. -cluster oder Mischformen davon,
   (b) Übergangsmetall- und insbesondere Edelmetall-basierte Cluster und Nanopartikel,
   (c) Ferrite,
   (d) Metallpnictide,
   (e) Metallchalkogenide,

(f) oxidische Katalysatoren und Trägermaterialien für Katalysatoren, umfassend $SiO_2$, $Al_2O_3$, $Ga_2O_3$, $In_2O_3$, TiOz, $CeO_2$, $La_2O_3$, $ZrO_2$, $V_2O_5$ und deren Mischformen, und
(g) Metallcarbide.

**3.** Anlage gemäß Anspruch 1 oder 2, welche insgesamt mindestens drei kontinuierliche Rührkesselreaktoren (CSTRs), vorzugsweise mindestens eine aus mindestens 3 CSTRs bestehende CSTR-Kaskade, aufweist.

**4.** Anlage gemäß einem der Ansprüche 1 bis 3, welche Zulaufvorrichtungen (Multidosierpunkte) und Ablaufvorrichtungen (Multientnahmepunkte) an mehreren ausgewählten CSTRs in der Anlage aufweist.

**5.** Anlage gemäß einem der Ansprüche 1 bis 4, worin die einzelnen CSTRs jeweils über deren Reaktordeckel oder -verschlüsse variabel einstellbare Reaktorvolumina aufweisen.

**6.** Anlage gemäß einem der Ansprüche 1 bis 5, worin

(i) die Reaktormodule umfassend die CSTR-Kaskaden hintereinander (seriell) angeordnet sind, oder
(ii) die Reaktormodule umfassend die CSTR-Kaskaden parallel zueinander angeordnet sind, oder
(iii) sowohl seriell angeordnete Reaktormodule mit CSTR-Kaskaden als auch parallel angeordnete Reaktormodule mit CSTR-Kaskaden enthalten sind, oder
(iv) mindestens drei Reaktormodule seriell angeordnet sind, oder
(v) mindestens zwei Reaktormodule seriell angeordnet sind und zusätzlich mindestens ein Reaktormodul parallel zu den seriell angeordneten Reaktormodulen angeordnet ist, oder
(vi) zwei oder mehr Reaktormodule parallel zueinander angeordnet sind und mindestens ein weiteres Reaktormodul seriell vor oder nach den parallel angeordneten Reaktormodulen angeordnet ist, oder
(vii) mehrere serielle Anordnungen von Reaktormodulen zueinander parallel angeordnet sind.

**7.** Anlage gemäß einem der Ansprüche 1 bis 6, umfassend außerdem eine oder mehrere voneinander unabhängige Vorrichtungen zum Heizen der CSTRs und/oder der Reaktormodule, worin diese Heizvorrichtungen so ausgestattet sind, dass

(i) alle CSTRs in einem Reaktormodul gleichmäßig temperiert werden, oder
(ii) innerhalb eines Reaktormoduls Heizzonen gebildet werden können, die eine Temperierung der einzelnen CSTRs innerhalb eines Moduls unabhängig voneinander ermöglicht, oder
(iii) alle CSTRs in der Anlage unabhängig voneinander temperiert werden können.

**8.** Anlage gemäß einem der Ansprüche 1 bis 7, welche hinsichtlich der Anzahl und Anordnung der einzelnen Reaktormodule und der einzelnen CSTRs innerhalb der Reaktormodule einen modularen und variabel anpassbaren Aufbau aufweist.

**9.** Anlage gemäß einem der Ansprüche 1 bis 8, worin

(i) mindestens ein Reaktormodul eine CSTR-Kaskade aus 3, 4 oder 5 CSTRs aufweist, oder
(ii) mindestens zwei Reaktormodule unabhängig voneinander jeweils mindestens zwei hintereinander angeordnete CSTRs in einer Anordnung einer CSTR-Kaskade aufweisen, oder
(iii) mindestens zwei Reaktormodule unabhängig voneinander jeweils 3, 4 oder 5 hintereinander angeordnete CSTRs in einer Anordnung einer CSTR-Kaskade aufweisen, oder
(iv) drei oder mehr Reaktormodule jeweils mehrere hintereinander angeordnete CSTRs in einer Anordnung einer CSTR-Kaskade umfassen.

**10.** Verwendung der Anlage gemäß 1 bis 9 zur kontinuierlichen Herstellung von Clustern und/oder Nanopartikeln ausgewählt aus den Gruppen umfassend

(a) Metall- oder Metalloxidpartikel bzw. -cluster oder Mischformen davon,
(b) Übergangsmetall- und insbesondere Edelmetall-basierte Cluster und Nanopartikel,
(c) Ferrite,
(d) Metallpnictide,
(e) Metallchalkogenide,
(f) oxidische Katalysatoren und Trägermaterialien für Katalysatoren, umfassend $SiO_2$, $Al_2O_3$, $Ga_2O_3$, $In_2O_3$,

TiOz, $CeO_2$, $La_2O_3$, ZrOz, $V_2O_5$ und deren Mischformen,
(g) Metallcarbide.

**11.** Verwendung einer Anlage gemäß einem der Ansprüche 1 bis 9 zur kontinuierlichen Herstellung

(i) von Metall- oder Metalloxidpartikeln bzw. -cluster oder Mischformen davon, oder
(ii) von Übergangsmetall- und Edelmetall-basierten Nanopartikeln bzw. Clustern, oder
(iii) von Metall- oder Metalloxidnanopartikeln oder -clustern mit einer Kern-Schale-Struktur, worin die Anlage so ausgestattet ist, dass mindestens drei Reaktormodule seriell angeordnet sind und jeweils unabhängig voneinander 3 oder mehr CSTRs aufweisen, oder
(iv) von Metall-, Halbmetall- oder Übergangsmetall- und Edelmetall-basierten Nanopartikeln bzw. Clustern sowie deren Oxidformen immobilisiert auf einem Trägermaterial, worin die Anlage so ausgestattet ist, dass mindestens zwei Reaktormodule seriell angeordnet sind und mindestens ein Reaktormodul parallel zu den seriell angeordneten Reaktormodulen angeordnet ist, und worin die Reaktormodule jeweils unabhängig voneinander 3 oder mehr CSTRs aufweisen, oder
(v) von Trägerkatalysatoren.

**12.** Verfahren zur kontinuierlichen Herstellung von Clustern und/oder Nanopartikeln im Durchflussverfahren in einer Anlage gemäß Anspruch 1 bis 9, umfassend die Schritte

(a) Zuführung einer ersten Reaktionslösung zur Herstellung von Clustern oder Nanopartikeln (Präkursor 1) in einen CSTR in einem ersten Reaktormodul umfassend einen oder mehrere hintereinander angeordnete kontinuierliche Rührkesselreaktoren (CSTRs) und Ausbildung von Clustern oder Nanopartikeln aus der Reaktionslösung in einer ersten Keim-Wachstumsphase im Durchfluss durch den einen oder mehrere der CSTRs im Reaktormodul, und
(b) Überführung der im ersten Reaktormodul gebildeten Cluster oder Nanopartikel in ein zweites, seriell dazu angeordnetes, Reaktormodul umfassend einen oder mehrere hintereinander angeordnete kontinuierliche Rührkesselreaktoren (CSTRs), und
(c) Zuführung einer zweiten Reaktionslösung (Präkursor 2) und/oder Stabilisator-Lösung über die Zulaufvorrichtung an einem oder mehreren weiteren CSTRs im ersten oder zweiten Reaktormodul, so dass in den mit Präkursor 1 bespeisten CSTRs Cluster oder Nanopartikel in einer Keim-Wachstumsphase gebildet werden und in den mit Präkursor 2 bespeisten nachfolgend angeordneten CSTRs in einer Partikel-Wachstumsphase eine Zunahme der Nanopartikel- oder Clustergröße bzw. deren Stabilisierung durch Liganden erfolgt,
(d) gegebenenfalls Zuführung einer dritten Reaktionslösung (Präkursor 3) und/oder Stabilisator-Lösung über die Zulaufvorrichtung an einem oder mehreren weiteren CSTRs, die den mit Präkursor 2 bespeisten CSTRs nachfolgend angeordnet sind, im ersten, zweiten oder in einem oder mehreren weiteren Reaktormodulen,

wobei die in die Reaktormodule eingeführten Reaktionslösungen (Präkursorlösungen / Stabilisator-Lösung) jeweils unabhängig voneinander gleiche oder unterschiedliche Reaktionslösungen sein können.

**13.** Verfahren zur kontinuierlichen Herstellung von Clustern und/oder Nanopartikeln gemäß Anspruch 12,

(i) worin die Reaktormodule seriell angeordnet sind und Präkursor 1 und Präkursor 2 und ggf. Präkursor 3 die gleiche Zusammensetzung aufweisen, und damit Nanopartikel bzw. Cluster hergestellt werden, welche eine einheitliche Zusammensetzung mit definierter Partikelgröße aufweisen, oder
(ii) worin die Reaktormodule seriell angeordnet sind und worin wenigstens einer von Präkursor 2 und Präkursor 3 eine zu Präkursor 1 unterschiedliche Zusammensetzung aufweist, und damit Nanopartikel bzw. Cluster hergestellt werden, welche eine Kern-Schale-Struktur mit jeweils unterschiedlicher Zusammensetzung in Kern und Schale aufweisen, oder
(iii) umfassend außerdem die Herstellung eines weiteren Materials in einem oder mehreren weiteren Reaktormodulen, welche parallel zu den seriell angeordneten Reaktormodulen angeordnet sind, und Zusammenführung des weiteren Materials und der Nanopartikel nach Durchlaufen der jeweiligen parallel angeordneten Reaktormodule mit den CSTR-Kaskaden und Modifizierung der Nanopartikel bzw. Cluster mit dem weiteren Material unter Erhalt modifizierter Nanopartikel.

**14.** Verfahren zur kontinuierlichen Herstellung von Clustern und/oder Nanopartikeln gemäß Anspruch 13, umfassend die Herstellung eines weiteren Materials welches ein Trägermaterial ist, welches in dem einen oder den mehreren weiteren Reaktormodulen, welche parallel zu den seriell angeordneten Reaktormodulen angeordnet sind, hergestellt

wird und Zusammenführung des Trägermaterials und der Nanopartikel nach Durchlaufen der jeweiligen parallel angeordneten Reaktormodule mit den CSTR-Kaskaden und Immobilisierung der Nanopartikel auf dem Trägermaterial unter Erhalt geträgerter Nanopartikel bzw. Cluster, insbesondere zur Herstellung von Trägerkatalysatoren.

**15.** Verfahren gemäß einem der Ansprüche 12 bis 14, worin die Herstellung der Cluster und/oder Nanopartikel durch variable Anpassung der Anzahl der CSTRs, durch variable Anpassung der Reaktorverweilzeit in den einzelnen CSTRs jeweils unabhängig voneinander, durch variable Einstellung der Reaktorvolumina in den einzelnen CSTRs jeweils unabhängig voneinander, durch variable Einstellung des Durchflusses durch die Reaktoren, durch variable Zugabe und/oder Abführung von Reaktionslösung aus der Anlage über Multidosierpunkte bzw. Multientnahmepunkte, und Kombinationen der vorgenannten Maßnahmen kontrolliert wird.

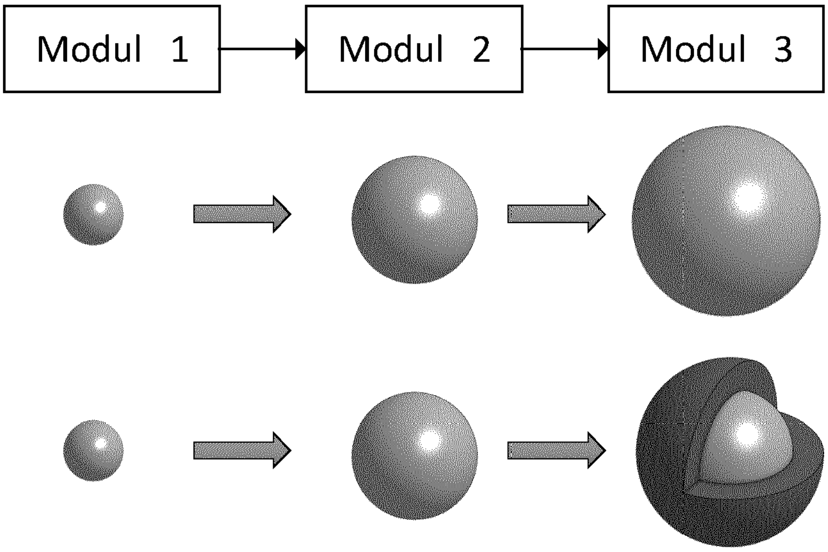


FIG. 1

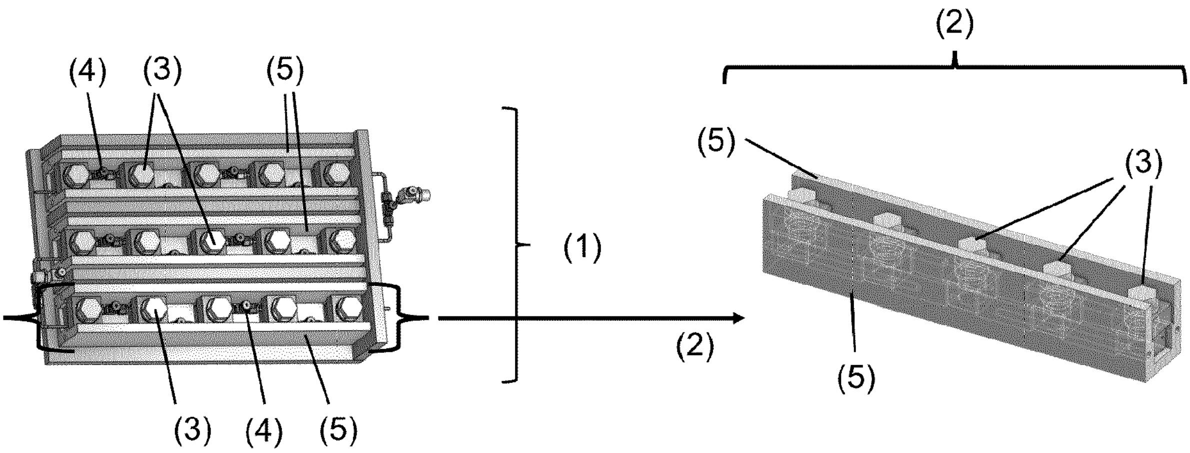


FIG. 2

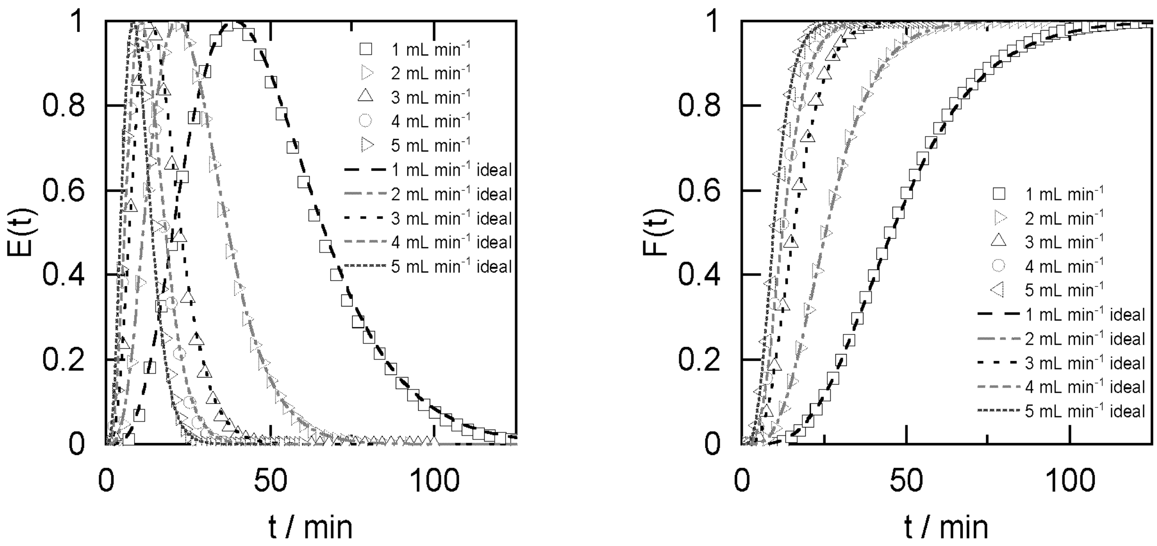
E(t)
t / min
1 mL min-1
2 mL min-1
3 mL min-1
4 mL min-1
5 mL min-1
1 mL min-1 ideal
2 mL min-1 ideal
3 mL min-1 ideal
4 mL min-1 ideal
5 mL min-1 ideal
F(t)
t / min
1 mL min-1
2 mL min-1
3 mL min-1
4 mL min-1
5 mL min-1
1 mL min-1 ideal
2 mL min-1 ideal
3 mL min-1 ideal
4 mL min-1 ideal
5 mL min-1 ideal

FIG. 3

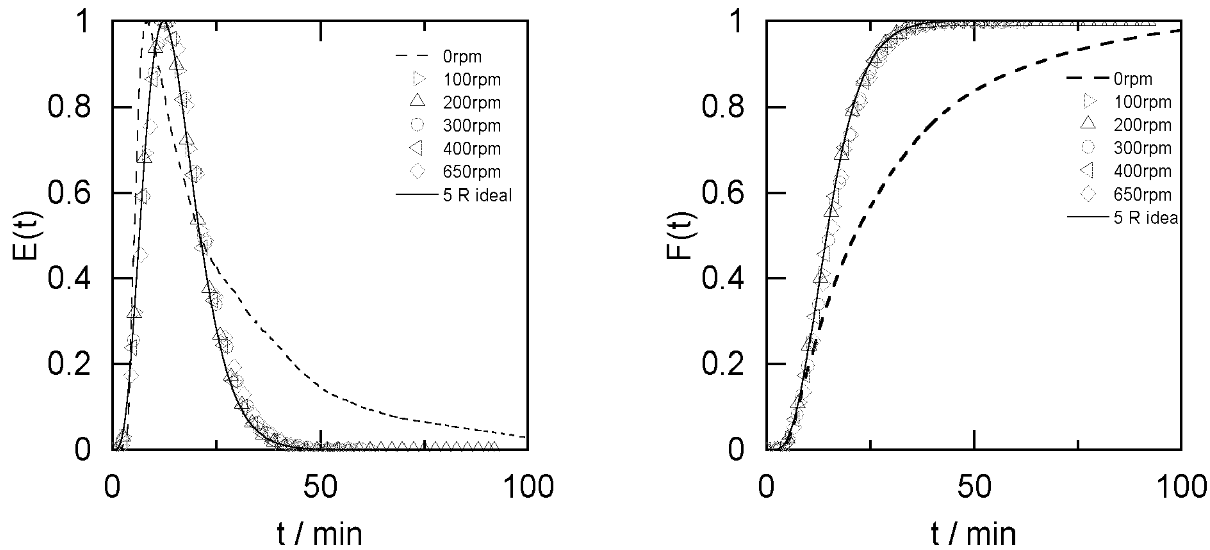
E(t)
t / min
0rpm
100rpm
200rpm
300rpm
400rpm
650rpm
5 R ideal
F(t)
t / min
0rpm
100rpm
200rpm
300rpm
400rpm
650rpm
5 R idea

FIG. 4

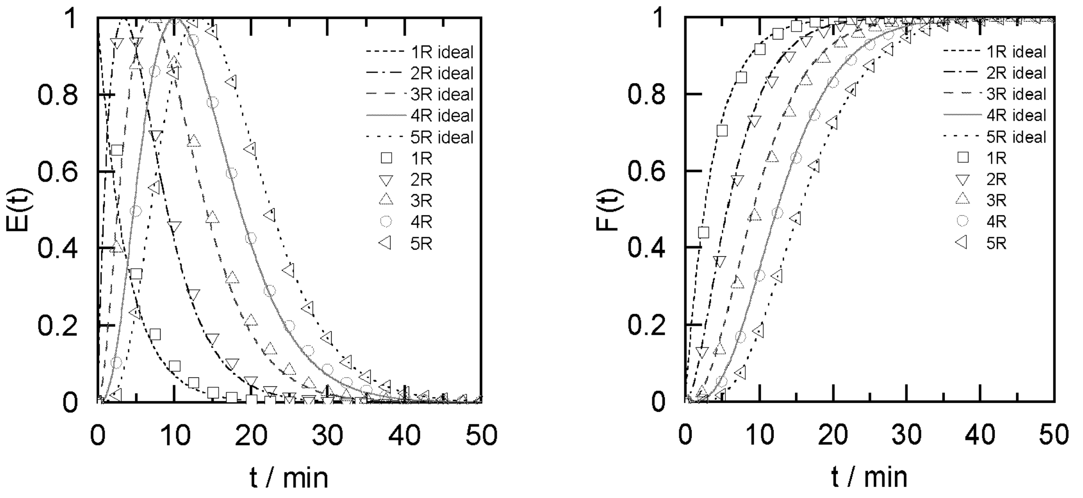


FIG. 5

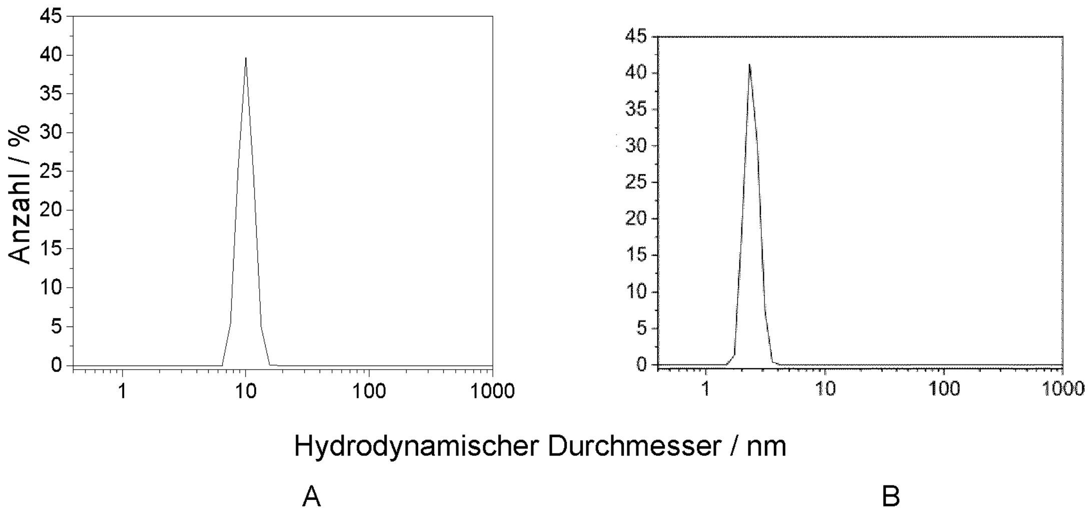


FIG. 6

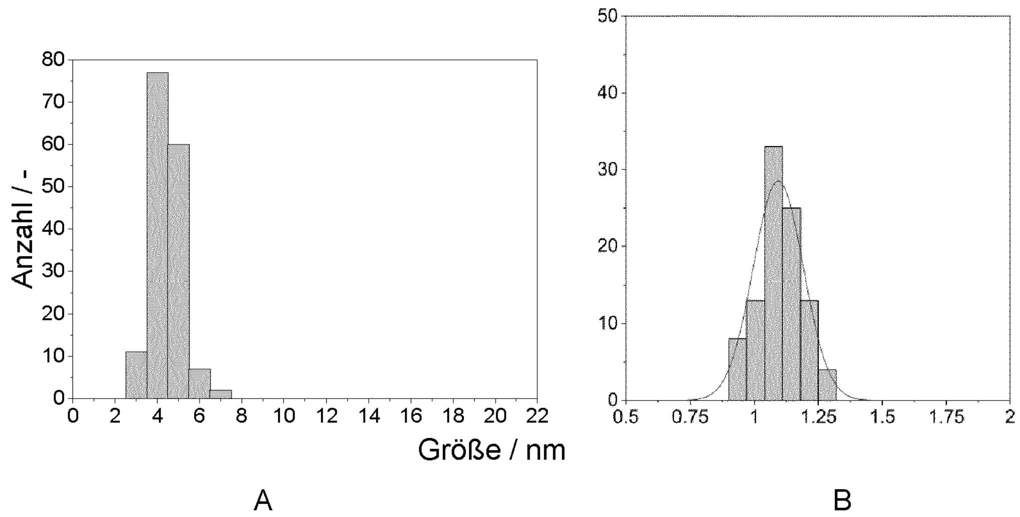


FIG. 7

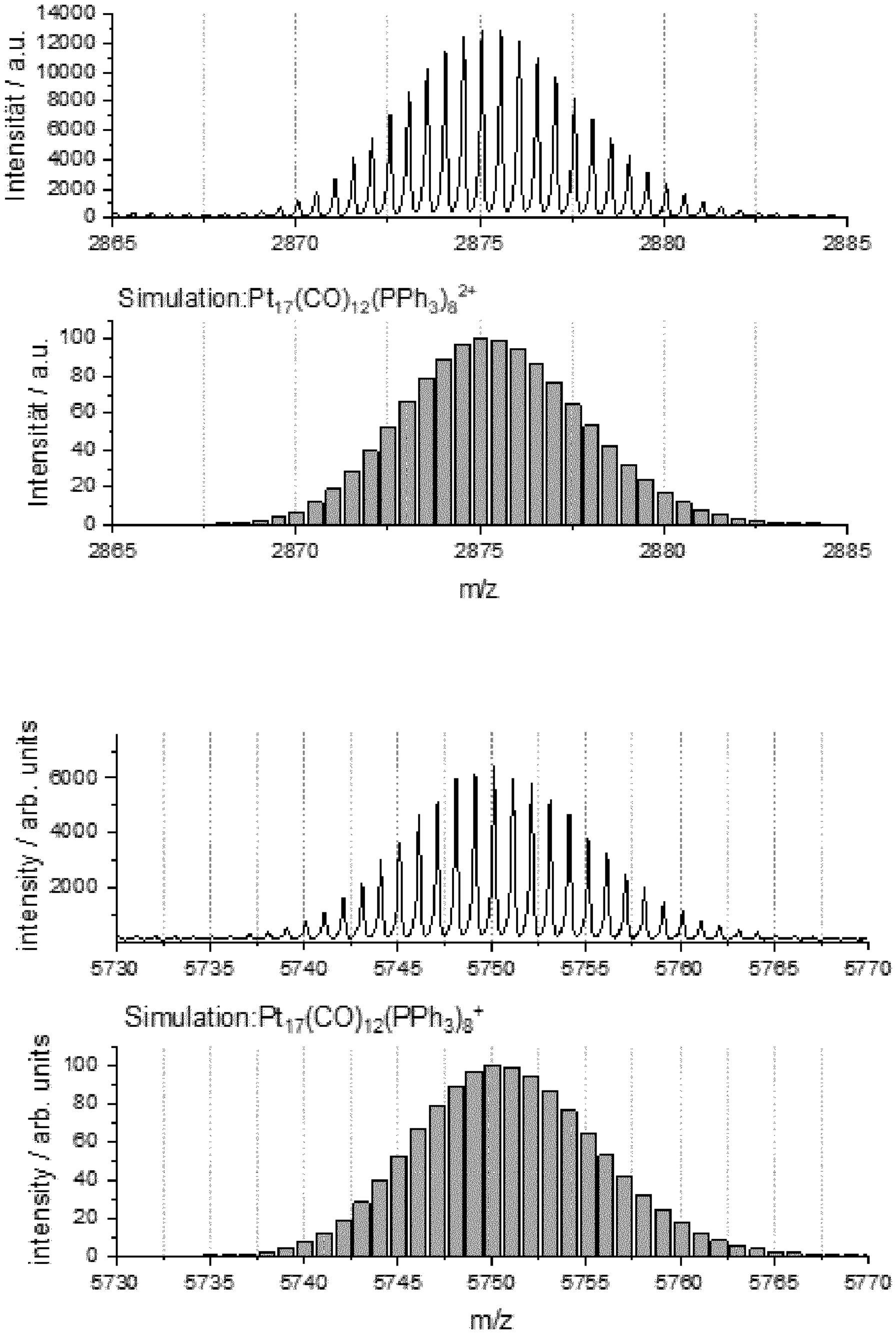
Intensität / a.u.
Simulation:$Pt_{17}(CO)_{12}(PPh_3)_8^{2+}$
Intensität / a.u.
m/z
intensity / arb. units
Simulation:$Pt_{17}(CO)_{12}(PPh_3)_8^{+}$
intensity / arb. units
m/z

Fig. 8

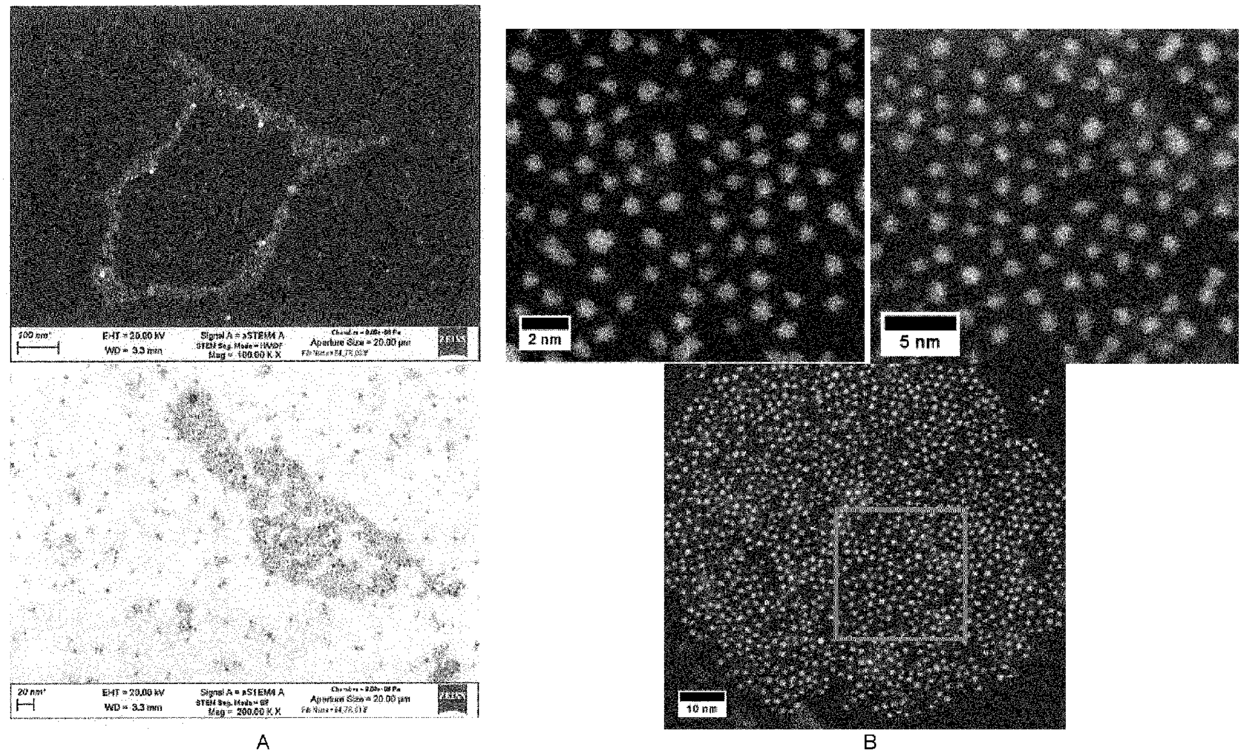
EHT = 20.00 kV
WD = 3.3 mm
Aperture Size = 20.00 µm
Mag = 100.00 K X
EHT = 20.00 kV
WD = 3.3 mm
Aperture Size = 20.00 µm
Mag = 200.00 K X
2 nm
5 nm
10 nm

A

B

FIG. 9

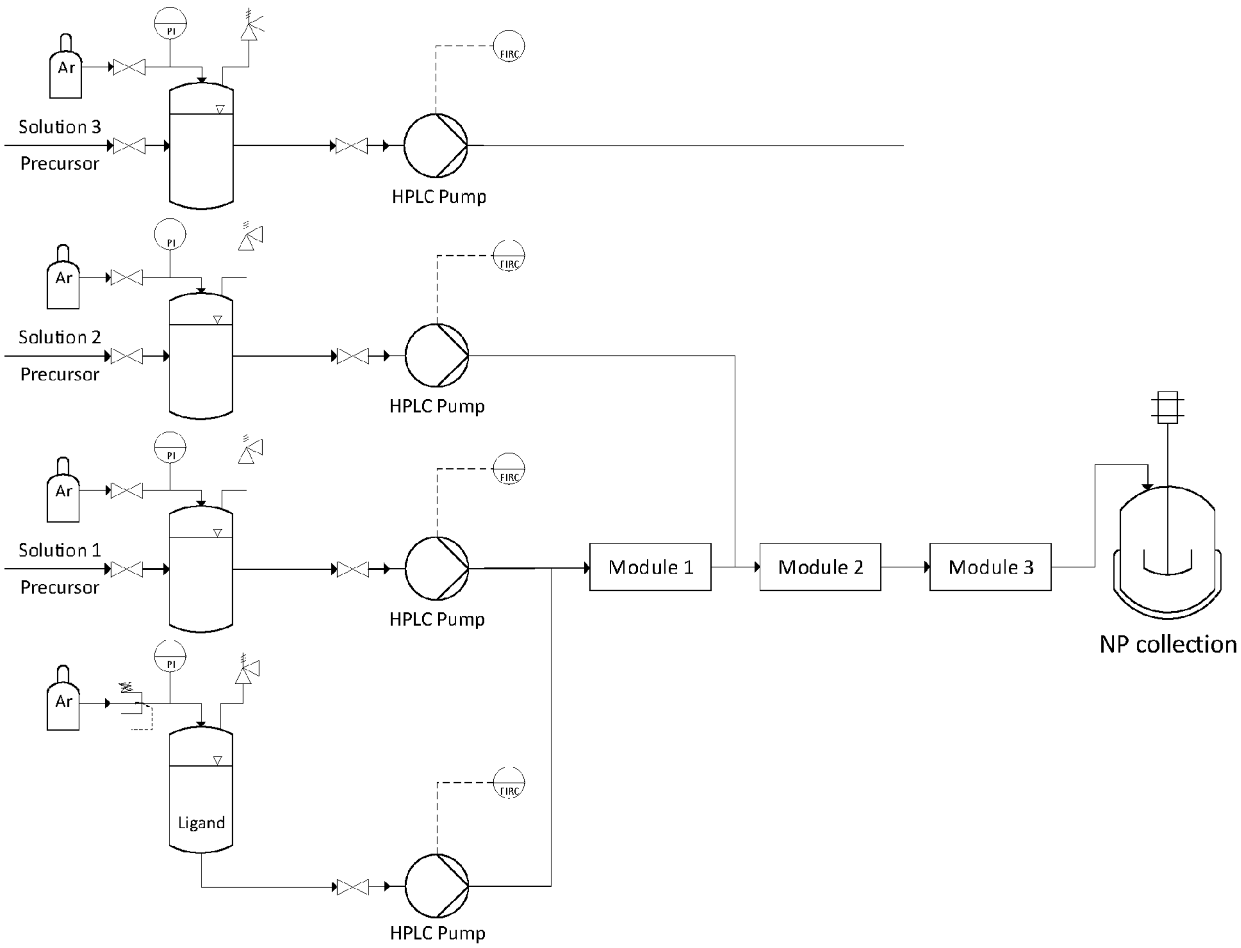
Ar
PI
FIRC
Solution 3
Precursor
HPLC Pump
Ar
PI
FIRC
Solution 2
Precursor
HPLC Pump
Ar
PI
FIRC
Solution 1
Precursor
HPLC Pump
Module 1
Module 2
Module 3
NP collection
Ar
PI
Ligand
FIRC
HPLC Pump

FIG. 10

Europäisches Patentamt
European Patent Office
Office européen des brevets

# EUROPÄISCHER RECHERCHENBERICHT

Nummer der Anmeldung
EP 24 15 3934

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| Y,D | US 2021/060656 A1 (KULKARNI AMOL ARVIND [IN] ET AL) 4. März 2021 (2021-03-04)<br>* Absätze [0008], [0023], [0032]; Beispiel 5 *<br>----- | 1-4,6-15 | INV.<br>B01J19/00<br>B01J37/00<br>B01J35/40<br>B01J35/45<br><br>ADD.<br>B01J23/42<br>B01J23/44 |
| Y | EP 1 256 378 A2 (BAYER AG [DE]) 13. November 2002 (2002-11-13)<br>* Absätze [0015] - [0017], [0026] - [0034] *<br>----- | 1-4,6-15 | |
| Y | NORBERT KOCKMANN: "Scale-up-fähiges Equipment für die Prozessentwicklung", CHEMIE INGENIEUR TECHNIK, WILEY VCH. VERLAG, WEINHEIM; DE, Bd. 84, Nr. 5, 5. April 2012 (2012-04-05), Seiten 646-659, XP071181461, ISSN: 0009-286X, DOI: 10.1002/CITE.201100218<br>* das ganze Dokument *<br>----- | 1-4,6-15 | |
| Y | DE 10 2009 015470 A1 (BYK CHEMIE GMBH [DE]) 17. Juni 2010 (2010-06-17)<br>* Absätze [0057], [0058] *<br>----- | 1-4,6-15 | RECHERCHIERTE SACHGEBIETE (IPC)<br><br>B01J |
| A,D | CIABATTI IACOPO ET AL: "Platinum Carbonyl Clusters Chemistry: Four Decades of Challenging Nanoscience", JOURNAL OF CLUSTER SCIENCE, SPRINGER US, NEW YORK, Bd. 25, Nr. 1, 29. September 2013 (2013-09-29), Seiten 115-146, XP035335952, ISSN: 1040-7278, DOI: 10.1007/S10876-013-0639-3 [gefunden am 2013-09-29]<br>* das ganze Dokument *<br>----- | 10-15 | |

Der vorliegende Recherchenbericht wurde für alle Patentansprüche erstellt

2

| Recherchenort | Abschlußdatum der Recherche | Prüfer |
|---|---|---|
| München | 23. Mai 2024 | Borello, Ettore |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
..........................................................
& : Mitglied der gleichen Patentfamilie, übereinstimmendes Dokument

EPO FORM 1503 03.82 (P04C03)

# ANHANG ZUM EUROPÄISCHEN RECHERCHENBERICHT ÜBER DIE EUROPÄISCHE PATENTANMELDUNG NR.

EP 24 15 3934

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

23-05-2024

| Im Recherchenbericht angeführtes Patentdokument | Datum der Veröffentlichung | Mitglied(er) der Patentfamilie | Datum der Veröffentlichung |
|---|---|---|---|
| US 2021060656 A1 | 04-03-2021 | CN 111225755 A | 02-06-2020 |
| | | EP 3678804 A1 | 15-07-2020 |
| | | ES 2927254 T3 | 03-11-2022 |
| | | JP 7225217 B2 | 20-02-2023 |
| | | JP 2021503039 A | 04-02-2021 |
| | | KR 20200051682 A | 13-05-2020 |
| | | US 2021060656 A1 | 04-03-2021 |
| | | WO 2019049172 A1 | 14-03-2019 |
| EP 1256378 A2 | 13-11-2002 | CA 2385280 A1 | 10-11-2002 |
| | | DE 10122491 A1 | 14-11-2002 |
| | | EP 1256378 A2 | 13-11-2002 |
| | | JP 4621407 B2 | 26-01-2011 |
| | | JP 2003075451 A | 12-03-2003 |
| | | US 2002172629 A1 | 21-11-2002 |
| DE 102009015470 A1 | 17-06-2010 | BR PI0923509 A2 | 24-09-2019 |
| | | CN 102245333 A | 16-11-2011 |
| | | DE 102009015470 A1 | 17-06-2010 |
| | | EP 2358489 A1 | 24-08-2011 |
| | | JP 5833447 B2 | 16-12-2015 |
| | | JP 2012511627 A | 24-05-2012 |
| | | KR 20110099731 A | 08-09-2011 |
| | | US 2012037041 A1 | 16-02-2012 |
| | | WO 2010066335 A1 | 17-06-2010 |

EPO FORM P0461

Für nähere Einzelheiten zu diesem Anhang : siehe Amtsblatt des Europäischen Patentamts, Nr.12/82

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente

- DE 102004003925 A1
- US 2015108400 A1
- US 20210060656 A1
- DE 2250274 A

### In der Beschreibung aufgeführte Nicht-Patentliteratur

- *ACS Catal.,* 2021, vol. 11, 2288-2301
- **Y. MO ; K. F. JENSEN.** A miniature CSTR cascade for continous flow of reactions containing solids. *React. Chem. Eng.,* 2016, vol. 1, 501-507
- *Ind. Eng. Chem. Res.,* 2020, vol. 59 (38), 16669-16683
- *ACS Appl. Mater. Interfaces,* 2020, vol. 12, 6699-6706
- **NESSELBERGER, M et al.** The effect of particle proximity on the oxygen reduction rate of size-selected platinum clusters. *Nat. Mater.,* 2013, vol. 12 (10), 919-924
- **GARLYYEV, B. et al.** Optimizing the Size of Platinum Nanoparticles for Enhanced Mass Activity in the Electrochemical Oxygen Reduction Reaction. *Angewandte Chemie International Edition,* 2019, vol. 58 (28), 9596-9600
- **CIABATTI et al.** Platinum Carbonyl Clusters Chemistry: Four Decades of Challenging Nanoscience. *J. Cluster Sci.,* 2014, vol. 25 (1), 115-146
- **NAIR, L. V. et al.** [Pt17(CO)12(PPh3)8]n+ (n = 1, 2): Synthesis and Geometrie and Electronic Structures. *The Journal of Physical Chemistry C,* 2017, vol. 121 (20), 11002-11009
- **VON SCHMITT et al.** Continous flow synthesis of atom-precise platinum clusters. *ChemRxiv,* 24. November 2023